(19) Europäisches Patentamt
European Patent Office
Office européen des brevets

(11) **EP 4 343 024 A2**

(12) **EUROPÄISCHE PATENTANMELDUNG**

(43) Veröffentlichungstag:
27.03.2024  Patentblatt 2024/13

(21) Anmeldenummer: 23000095.2

(22) Anmeldetag: 04.07.2023

(51) Internationale Patentklassifikation (IPC):
*C25B 1/01* (2021.01)     *C25B 1/04* (2021.01)
*C25B 3/21* (2021.01)

(52) Gemeinsame Patentklassifikation (CPC):
**C25B 1/01; C25B 1/04; C25B 3/21**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **05.07.2022  EP 22000176**

(71) Anmelder: **Geier, Stefan A.**
**83071 Haidholzen bei Rosenheim (DE)**

(72) Erfinder: **Geier, Stefan A.**
**83071 Haidholzen bei Rosenheim (DE)**

(54) **METALLIONEN BASIERTE KRISTALLÄQUIVALENTE WÜRFEL MIT LEHNE (...Z. BSP. MN4O6LA) BIONISCHE KATALYTISCHE PHOTOZELLE MIT PROZESSANGABE ZUR WASSERSPALTUNG IN WASSERSTOFF UND**

(57)    Pico- bzw. nanotechnologische Vorrichtung im Angström-Größenbereich in Form einer Metallionen basierten tesseraktoiden Würfel mit Lehne (reduzierter Tesserakt; z.Bsp. 5 Metallionen MesOs, z.Bsp. insbesondere $Mn_4O_5Ca$ oder $Mn_4O_5Sr$) bionischen katalytischen Photozelle mit Prozessangabe zur Wasserspaltung in Wasserstoff und Sauerstoff (oder allgemein zur Spaltung von n $H_2X$ in n $H_2$ und k $X_m$ oder 2n $H^+$ + 2n $e^-$ und k $X_m$ mit X ein geeignetes Element oder Molekül; k, l, m, n stöchiometrisch relevante natürliche Zahlen). Die tesseraktoide Würfel mit Lehne Struktur ermöglicht eine Adsorbtion von $H_2X$ Molekülen mit einer ersten Elektronenweitergabe in den Cluster und eine Kurzzeit-Speicherung von drei Elektronen in den Seitenquadraten; das vierte Elektron verursacht über Kantenberührungen der Seitenquadrate etc. eine gerichtete (relativ zentrifugale) Elektronenweitergabe durch Elektronen-Interaktionen über ein Heteroion (z.Bsp. Ca oder Sr). Dieses Konzept stellt gleichzeitig eine hochkonsistente Lösung des KOK-Zyklus-Problems der Photosynthese (Photosynthese II) dar (vierfacher Elektronentransfer entsprechend der von KLITZING Konstante $R_K = h/e^2$, Quantum des Quanten-HALL-Effekts, und der SOMMERFELD'schen Feinstrukturkonstante alpha) und ist im Einklang mit dem bisher nur theoretischen Konzept der KALUZA-KLEIN "5th charge related dimension" und der KALUZA-KLEIN Kompaktifizierung (vgl. bitte string theories, M theory, holographie principle, AdS/CFT correspondence; vgl. Roger PENROSE, Leonard SUSSKIND und andere).

In Bezug auf den Klimawandel (climate change), die Verknappung von Gas und Öl und die anstehende und drängende Umstellung auf eine Wasserstoffwirtschaft ist diese Würfel mit Lehne Photozelle von Bedeutung.

**Vorläufige Zeichnung zur vorläufigen Zusammenfassung (Zeichnung 2 der Beschreibung)**
Legende zur Zeichnung:

Tesseraktoide Würfel mit Lehne Struktur zur Wasserspaltung (allgemein $H_2X$ Spaltung) im einstelligen Angström-Größenbereich mit vier Elektronen basierend auf dem Photosystem II der Photosynthese: Bei einer Besetzung der 10 Ecken $x_i$ des nach dem KOK-Zyklus Sauerstoff-produzierenden katalytischen Kerns mit z.Bsp. $Mn_4O_5Ca$ (oder $Mn_4O_5Sr$) erlaubt es die Würfel mit Lehne Struktur die ersten drei Elektronen auf drei geometrisch separierte Quadrate zu verteilen, das vierte Elektron verbindet die vier Elektronen über eine Würfel- bzw. Lehnenkante. Alle vier Elektronen können dann z.Bsp. über Ca (oder Sr ...) vom Cluster abgegeben (z.Bsp. zu einem Tyrosin) werden. Die Abstände der Elektronen im einstelligen Angström-Größenbereich in der Würfel mit Lehne Struktur erlauben ggf. (Pseudo-) COOPER Elektronenpaar Effekte. Das vierte Elektron entspricht dabei dem instabilen $S^{4+}$ Zustand nach Bessel KOK. Das KOK-Zyklus-Problem ist damit gelöst und die Würfel mit Lehne Struktur kann pico- bzw. nanotechnologisch genutzt werden.

(Anmerkung: Die Zeichnung der Zusammenfassung ist identisch mit der Zeichnung 2 der Beschreibung.)

Zeichnung 2

**Beschreibung**

Metall- und Sauerstoff-Ionen[1] basierte kristalläquivalente und dotierterhalbleiteräquivalente, tesseraktoide "Würfel mit Lehne" (10 ausgezeichnete Koordinaten für Atome und Moleküle; z.Bsp. 5 Metallionen und z.Bsp. 5 Sauerstoff-Atome, z.Bsp. insbesondere $Mn_4O_5Ca$, aber z.Bsp. ebenso $Mn_4O_5Sr$) bionische katalytische Photozellenkernstruktur im einstelligen Ångström-Größenbereich mit Prozessangabe zur Wasserspaltung in Wasserstoff und Sauerstoff (allgemein: Spaltung von $n \cdot H_2X$ in $n \cdot H_2$ oder $2n \cdot H$ und $n \cdot X$ oder $n/2 \cdot X_2$).

Die pico-nano-technologische Vorrichtung zur Spaltung von Wasser in Sauerstoff und Wasserstoff im Sinne des KOK-Zyklus der Photosynthese II mittels vier Elektronen, die in einer mit Atomen, Ionen und bzw. oder mit Molekülen gebildeten kristalläquivalenten "Würfel mit Lehne" pico-nano-technologischen Struktur im einstelligen (bis zweistelligen) Ångström-Größenbereich zusammengeführt werden und (kurzfristig) in dieser Struktur gespeichert werden, ist in den Zeichnungen 1 und 2 idealtypisch dargestellt. Vier Elektronen werden entsprechend den Gesetzen der Physik, einschließlich der Gesetze und der Prinzipien der Quantenphysik [auch Energie- und Impulsübertragungen von Bosonen (Photonen, Gravitonen, ...) auf Fermionen (Elektronen, Wasser, ...)], des Standard Modells der Physik[2] mit der entsprechenden Lagrange-Dichte und der physikalischen Chemie von zwei Molekülen Wasser auf den $Me_5O_5$ Cluster (idealtypisch $Mn_4O_5Ca$) übertragen und die Spaltungsprodukte Sauerstoff (ein Molekül) und Wasserstoff (vier Protonen bzw. zwei Moleküle) entstehen[3].

Diese pico-nano-technologische Vorrichtung als Photosystem II[4] bezogene dreidimensionale tesseraktoide "Würfel mit Lehne" Photozellenkernstruktur mit 10 ausgezeichneten Koordinaten $x_i$ [i =1 bis 10: Die $x_i$ sind durch 10 Atome, Ionen oder Moleküle zu besetzen (Zeichnung 1)[5].] ist im einstelligen (maximal zweistelligen) Ångström-Größenbereich (1 Ångström = $10^{-10}$ m = 0.1 Nanometer) angesiedelt.

Die empirische bionische Grundstruktur mit den Atomen bzw. Ionen $Mn_4O_5Ca$ ist in Zeichnung 2 dargestellt, wobei das Ca-Ion[6] oder alternativ ein Sr-Ion, allgemein ein Hetero-Ion, mit allen anderen Ionen in orthogonaler symmetrischer Weise bzgl. der Medianebene der Würfel mit Lehne Struktur gespiegelt, ohne Effizienzverlust die gegenüberliegenden Positionen einnehmen kann; das Hetero-Ion ist als Dotierung in einem d-Orbitate mitbezogenen JAHN-TELLER-Theorem konformen Kristall mit MnO mit Halbleitereigenschaften als Kristallgrundlage[7] zu verstehen und ist so prädestinierter Abgabepunkt der Elektronen relativ distal zu den Wassermolekülen (vgl. GEIER et al 2023) beim Wasserspalten von Wasser in $H^+$ und $O^-$ mit vier Elektronen im Sinne des KOK-Zyklus (Bessel KOK).

Die tesseraktoide Würfel plus Lehne Struktur erlaubt es, drei Quadrate mit je einem Elektron so zu besetzen und aufzufüllen, dass die Quadrate keine gemeinsame Kante haben, also so, dass die mit einem Elektron besetzten quadratischen Strukturen relativ zueinander separiert sind, sofern die 3 Elektronen so wie in Zeichnung 1 gezeichnet in die Würfel plus Lehne[8] Struktur eingebracht werden; der Abstand der 3 Elektronen $e_j$ ist dann maximal[9]. Das vierte Elektron $e_4$ kann nur in einer Weise eingebracht werden, bei der die Speicherquadrate, d.h. die Quadrate, die bisher die drei Elektronen $e_1$, $e_2$ und $e_3$ ohne Kantenberührung aufgenommen haben, sich an den Kanten berühren (die Quadrate $x_1x_2x_3x_4$, $x_5x_6x_7x_8$, $x_1x_2x_6x_5$ und $x_4x_3x_7x_8$[10]). Dies entspricht einem konjugierten Zustand (konjugiert hier im weiteren Sinne) und vor allem dem instabilen $S^{4+}$ Zustand nach Bessel KOK[11] bei der Photosynthese II und führt zu einer vollständigen Übergabe der Elektronen von den an die Würfel plus Lehne Struktur assoziierten Wassermolekülen an die tesseraktoide Würfel mit Lehne Struktur und zur Wasserspaltung von 2 $H_2O$ in $O_2$ und $4H^+$, und, ggf. unter Verwendung geeigneter weiterer Materialien wie z.Bsp. insbesondere $X_xMn_yO_z$-Filme mit X typischerweise ein Metall oder Metalloid und x,y = 1, wobei für Mn auch andere Metalle wie Mo, Fe oder Re etc. verwendet werden können, und auch unter Verwendung nanotechnologischer Netze aus Elementen der Borgruppe oder anderer Metalle, Atome oder Moleküle oder unter Verwendung von ggf. bionischen Fe-Clustern etc., zur Freisetzung von 2 $H_2$. Die Erstbesetzung des Lehnenquadrats ist des Weiteren voll kompatibel mit der Annahme von James BARBER (2012) und Johannes MESSINGER et al. (1995), dass unter optimalen Bedingungen nur das Manganion an der oberen Lehnenkante eine fünffache positive Oxidationsstufe Mn[V] aufweist, die gleichzeitig mit der solitären Nichtbesetzung eines niederenergetischen $t_{2g}$-d-Orbitals dieses Manganions einhergeht, wohingegen die anderen Manganionen eine niedrigere Oxidationsstufe aufweisen, je nach dem $S_i$ state des KOK Zyklus drei oder vier positive Ladungen (Mn[III] bis Mn[MnIV]). Im $S_4$ state sind dann alle drei restlichen Manganionen bei jeweils vier positiven Ladungen somit, bei Betrachtung der Diagonalen, um zumindest $\approx 1/2$ $e^+$ weniger elektrophil. Dann hat das nicht mit einem Ca Ion oder Sr Ion besetzte parasagittale Seitenquadrat die nächststärkere Elektrophilie und wird mit dem zweiten Elektron besetzt. Eine Drittbesetzung mit einem Elektron ist dann im dorsalen Seitenquadrat aus Elektrophiliegründen gut möglich, da [IV] + [IV] = 8 $e^+$ gegenüber [II] + [IV] = 6 $e^+$ für Calcium$^{2+}$ und Mangan$^{4+}$; da aber im bionischen und biologischen System auf das Ca Ion ein hoher Elektronensog ausgeübt wird, ist typischerweise eine Drittbesetzung des verbleibenden parasagittalen Seitenquadrats zu erwarten. Die Viertbesetzung mit einem Elektron erfolgt dann bei einem beliebigen weiteren Seitenquadrat, wobei das Quadrat ad terram unter dem Aspekt der Distanzmaximierung ausgezeichnet ist. Entsprechende Überlegungen gelten ebenso, wenn beispielsweise das obere Mangan Ion der Lehne die Oxidationsstufe [IV] und andere caudale Mangan Ionen die Oxidationsstufe [III] aufweisen (vgl. BJÖRN

LO, SHEVELA D & GOVINDNJEE 2023).

Im Sinne einer Protizität (proticity) oder Protonizität nach Peter MITCHELL (1978) kann bei einer Kompartimentierung von Protonen durch geeignete Membranen oder Barrieren ein chemiosmotischer Gradient (protonische Potentialdifferenz[12] $\Delta P$ auf Grund einer Spannung $\Delta\Psi$ und einer pH Differenz: $\Delta P = \Delta\Psi - Z \times \Delta pH$ mit $Z = 2,3\ R\ T\ /\ F$, welche proportional zu einer Protonenbewegungskraft ist) aufgebaut werden, welcher u.a. zur bionischen ATP-Synthese oder Synthese anderer Energieträger unter Auslassung der oder teilweiser oder fast gänzlicher Umgehung der Photosynthese I verwendet werden; in diesem Kontext ist, zusätzlich zum linearen Elektronentransfer aus der Würfel mit Lehne Struktur heraus über z.Bsp. das Ca-Ion, der ggf. zweifache zyklische Elektronentransfer über die Plastochinonreduktion durch (i) den Q-Zyklus und den (ii) Photosystem-I-Cytochrom-$b_6$f-Zyklus anzufügen, welcher optional beim Übergang vom Photosystem II in Richtung Cytochrom $b_6$f oder Cytochrom $c_6$ etc. und Photosystem I gegeben ist und eine weitere Gewinnung von Protonen und $H_2$ über die Wasserspaltung hinaus auf bionische Weise ermöglicht[13].

Eine Betrachtung der tesseraktoiden Würfel mit Lehne Struktur bzw. Vorrichtung gibt über die Miteinbeziehung des Quanten HALL Effekts und der von KLITZING Konstante $R_K$, über " $\pi\ e{\wedge}2 = \pi\ h\ R(K)$ " in GEIER's KOK cycle (GEIER Stefan, 2021a), welche zu $e^2*pi$ als mitbeschreibende Größe zur Beschreibung der Speicherung eines Elektrons in einem Quadrat der Würfel mit Lehne Struktur führt, explizit der Möglichkeit einer Entkoppelung des transzendenten und irrationalen Faktors pi im Planck'schen Wirkungsquantum h mit $h = (pi)\ (2\ h)$ Raum, ohne diese als notwendig anzunehmen (vorläufige Evidenz einer Entkoppelungsmöglichkeit: rotatorische Komponente der cis-trans Retinal Umwandlung im Sinne der Photochemie nach George WALD etc. und GEIER's NEWTON's Cradle Dämpfungs Gleichung einer h-2h-bezogenen-Mechanik (vgl. Geier et al 2021, 2022 und Geier 2022a). Eine Entkoppelung des transzendenten und irrationalen Faktors pi im Planck'schen Wirkungsquantum h mit $h = pi\ (2\ h)$ erlaubt sinnvolle Betrachtungen zum Wirkungsgrad der Würfel mit Lehne Vorrichtung und der Photosynthese allgemein. Ist 2 h der Faktor der maximal möglich nutzbaren Wirkung bzw. Energie im relevanten Gegenstandbereich, so gilt für $h = 100\% \rightarrow 1 - pi/h = 1 - 0,474 = 0,526$; der maximale Wirkungsgrad ist dann 52,6%. Es ist daran zu denken, dass das Photosystem II (und hier wiederum zu unterscheiden die $\approx$20 bis 40 Retinal- und die $\approx$100 bis 200 Chlorophyllmoleküle), das Ubichinon-CoA-Cytochrome bf Komplex System und das Photosystem I (und hier ebenso wiederum die Retinale und die Chlorophyllmoleküle) unterschiedliche Wirkungsgrade aufweisen können. Nach meinem Dafürhalten legen die MeO oder MeS bezogenen Cluster Strukturen aller drei Systeme, die alle jeweils einen Tesserakt Bezug[14] aufweisen, die Relevanz einer Entkoppelung von $h = pi\ (2\ h)$ in 2 h, dem Spin von Gravitonen, und pi [entspricht einer sterischen Veränderung um 180 Grad, kompatibel mit Steven HAWKING's (1988) Spin 2h Interpretation als Ausdruck einer Rotation bzw. Rotationsfreiheit zur Identität um 180° bzw. pi als Ausdruck einer Rückstreuung oder eines Rückpralls nach NEWTON's reactio gegengleich actio in D3 bzw. entlang einer Tesserakt Hauptdiagonalen in D4].

Die tesseraktoide Würfel mit Lehne Struktur ermöglicht mit den Heteroionen Calcium oder Strontium etc. eine zumindest zweiphasige Aufnahme, Speicherung und Weiterleitung der vier Elektronen in einem drei- plus einschrittigen oder drei- plus zweischrittigen Prozess, auf Grund (i) der Geometrie der Kantenberührungen der Seitenquadrate der tesseraktoiden Würfel mit Lehne Struktur und (ii) der Energie-Aufspaltung der fünf d-Orbitale der fünf Metallionen in je drei $t_{2g}$ d-Orbitale mit niedrigerem Energieniveau plus zwei $e_g$ d-Orbitale mit höherem Energieniveau, also 15 $t_{2g}$ d-Orbitate und 10 $e_g$ d-Orbitate, wobei so beim Heteroion bis zu fünf Protonenbindungsstellen, wobei nur vier gebraucht werden (vgl. GOVINDJEE's Bicarbonat Ion in BJÖRN LO, SHEVELA D & GOVINDJEE 2023, das Chlorid-Ion nach AMES W, PANTAZIS DA & NEESE F 2010 und den Chlorid-Cll-Kanal nach BHOWMIC A, HUSSEIN R, BOGACZ I et al 2023), entstehen, jeweils unterschiedlichen Energieniveaus im Würfel mit Lehne (Quasi-)Kristall nach dem JAHN-TELLER-Theorem [zur hohen Relevanz von (3 + 1) + 1 Strukturen, die ebenso mit der Periodizität 4 der JOLIOT'schen Oz-Ertrag Oszillationen und der Periodizität fünf ($S_i$ mit i=0,1,2,3,4) des fünfstufigen KOK Zyklus vereinbar sind, in der Photochemie und der fortgeschrittenen Photovoltaik (Verwendung organischer Halbleiter wie z.Bsp. Anthracen, Tetracen oder Pentacen) unter der singlet fission- und Exzitonen-Perspektive etc. vgl. auch GEIER 2023b].

Allgemein kann die vorgestellte pico-bzw. nanotechnologische Vorrichtung zur Spaltung von $H_2X$ in $H_2$ und X verwendet werden, wobei neben Wasser $H_2O$ ebenso Schwefelwasserstoff $H_2S$, u.a. als empirisch begründete vermutete evolutionäre Vorstufe der Wasserspaltung im Rahmen der "grünen" Photosynthese [vergleiche u.a. anoxygene Purpurbakterien (Pseudomonadota) bzw. oxygene Cyanobacteria: vgl. u.a. besonders die Röntgenkristallographie-Modelle von Robert HUBER und Kollegen am Max-Planck-Institut für Biochemie, Martinsried bei München], von besonderem Interesse ist.

Die Photonen zur Energetisierung der Elektronen bzw. zur Impulsübertragung der Photonenimpulse auf die Elektronen etc. oder die Elektronenlöcher bzw. Ladungslöcher direkt können über jede Form der bekannten "Chlorophylle", "Retinale", "Lichtsammelkomplexe", (Trans-) Membranproteine, "Antennenkomplexe" oder "Pigmente" [vergleiche bitte (i) Robert EMERSON's $2400 = 2^5 \times 3 \times 5^2$ oder $2480 = 2^4\ 5 \times 31$ oder ebenso (eigene Recherche: Median als optimaler unverzerrter Parameter der Stichprobe mit n = 11, direkt nach den Experimenten aus EMERSON & ARNOLD's 1932, Table II, S.197, abgelesen) $2460 = 2^2 \times 3 \times 5 \times 41$ Chloro-

phyllmoleküle pro $O_2$ (die Prim-Faktoren $2^2$, 3 und 5 sind nach heutigen Kenntnissen, d.h. 2023, bereits Theorie-konsistent, sofern Exzitone und/oder (Pseudo-) COOPER Paare eingeführt werden, da auch 3 $H^+$ für die vom Protonengradienten angetriebene ATP-Synthase relevant sind und u.a. (ii) mit Robert HUBER, Johann DEISENHOFER und Hartmut MICHEL[15]] und andere Proteine, Moleküle oder bionische etc. (von bionischen oder nanotechnologischen FÖRSTER- oder DEXTER-(Resonanz-)Energietransfer-Systemen[16] bis hin zu organisch bewehrten oder nativen Quantum dots im Nanotechnologiebereich) und technische Systeme bereitgestellt werden.

Stefan Geier, Gerhart-Hauptmann-Str. 6, D-83071 Haidholzen - Stephanskirchen, Germany

[1] Selbstverständlich können insbeondere Schwefel-Atome (vgl. Eisen-Schwefel-Cluster $Fe_xS_yX_z$ mit X z.Bsp. { } oder Molybdän) und andere Atome oder Moleküle bzw. Ionen bei Eignung entsprechend der Sauerstoff-Atome für den Cluster verwendet werden; besonders geeignet sind die Elemente der VI. Hauptgruppe.

[2] Ein Einklang und eine Übereinstimmungs-Relation mit dem bisher nur theoretischen Konzept der KALUZA-KLEIN "5th charge related dimension", der KALUZA-KLEIN Kompaktifizierung, den string theories, der M theory, dem holographic principle, der AdS/CFT correspondence (vgl. Roger PENROSE, Leonard SUSSKIND, Juan MALDACENA und andere) ergibt sich zum einen über den Quanten-HALL-Effekt und über Klaus von KLITZING's $R_K$ (Endnote 10) und zum anderen über die prinzipielle Skalierbarkeit des Holographischen Prinzips, welches eng mit Quadraten im PLANCK-Längen-Bereich verbunden ist.

Wir konnten die Relevanz der Skalierbarkeit von PLANCK-Skalen-Basis-Größen bereits für das bifilare Pendel, NEWTON's Cradle und die Aorten-Compliance beim Menschen aufweisen (GEIER Stefan et al. 2022). Diese drei empirischen Skalierungsaufweisungen ermöglichen es, die Skalierbarkeit der PLANCK-Längen-Quadrate $l_{PLANCK}^2$ (oder ebenso der STONEY-Längen-Quadrate, da die Feinstruktur-Konstante alpha von SOMMERFELD ebenso in unsere Betrachtungen einfließt: $l_{STONEY}^2 = l_{PLANCK}^2 * alpha$) mit den Quadraten des $Mn_4O_5Ca$ Clusters und anderen tesseraktoiden, quadratoiden oder cubanen Clustern, Kristallen, Strukturen und Molekülen - nicht nur der Photosynthese - direkt in Beziehung zu setzen.

SOMMERFELD's $\alpha$ koppelt hier also die $l_{PLANCK}^2$-Quadrate der String-Theorie(n) und des Holografischen Prinzips über die elektromagnetische Wechselwirkung an die $l_{STONEY}^2$-Quadrate, womit die $l_{PLANCK}^2$-Quadrate jeweils somit eine Elementar-ladungsbezogene Zusatzdimension entsprechend des KALUZA-KLEIN-Konzeptes erhalten; gleichzeitig koppelt SOMMERFELD's alpha 1. die Photonen (der Photosynthese) an die Elektronen (der Photosynthese) und umgekehrt, womit die Fermionen und Bosonen Terme im Standard-Modell-Lagrangian ebenso unter dieser Perspektive relevant werden, und 2. die Elektronen (der Photosynthese) an die Ionen und Kerne im Cluster, im Pigment-Protein-Heterodimer und den weiteren Strukturen der Photosynthese (vgl. TKATCHENKO Alexandre et al 2021). Es ergibt sich hier, und das heißt insbesondere im Bereich der Biochemie und Biophysik der Photosynthese, somit eine sehr bedeutsame mehrdimensionale Konsistenz.

Eine weitere Übereinstimmungs-Relation ergibt sich bzgl. der tesseraktoiden Struktur des Würfel mit Lehne Clusters über eine nach dem gesicherten empirischen Wissen der Physik auf Grund von Energieaspekten und von Elektron-Kern-Distanzaspekten sehr sinnvollen Quadrierung der SOMMERFELD'schen Feinstruktur-Konstanten alpha über die Quadrierung der $l_{STONEY}^2$- und $l_{PLANCK}^2$*alpha-Quadrate: $(l_{STONEY}^2)^2 = l_{PLANCK}^4 * alpha^2$. Das Einheitsquadrat $l_{PLANCK}^2$ des Holografischen Prinzips bzw. $l_{STONEY}^2$ werden so zu einem Einheitstesserakt mit dem 4D-Volumen 1 (bzw. 1 * $alpha^{4/2} = 1_{STONEY}$), der an $alpha^2$ gekoppelt ist; $alpha^2$ koppelt nun diesen Tesserakt an die RYDBERG-Energie (vgl. MESCHEDE 2015, S. 717ff) und schafft so eine Basis für die Gültigkeit des Energieerhaltungssatzes nach Emmy NOETHER in einem tesseraktoiden PLANCK-STONEY-Größen-System ohne eine Zeitsymmetrie (Beliebigkeit der Translation und Concartination in der Zeit als Homogenität der Zeit) einzufordern. Da alpha die Wirkung an das Coulomb-Feld etc. koppelt (GAßNER & MÜLLER 2019) ist auch die über Ti/2 oder h gequantelte Wirkung als Integral über den Lagrangian an alpha als eine übergreifend verknüpfende Konstante gekoppelt und somit eine Wirkungserhaltung und abgeleitet daraus eine Impulserhaltung (Wirkung / Länge) gegeben, wobei alle drei abgeleiteten Größen unterschiedliche Symmetrieaspekte aufweisen (vgl.: $Länge^2$ ist sowohl in der Definition der Energie als auch in der Wirkung enthalten, $Zeit^2$ nur in der Energie; der Impuls enthält kein Quadrat von Länge oder Zeit; ein Tesserakt definiert ebenso eine Isotropie des Raumes und führt daher zur Drehimpuls- und Spin-Erhaltung im Sinne von Emmy NOETHER's Theorem und erklärt über $alpha^2$ Phänomene wie Singlet, Doublet und Triplet Zustände Unterschiede, die in der fortgeschrittenen Solarzellen-Physik und Photochemie aktuell von Bedeutung sind.). Im Sinne von Richard FEYNMAN gibt $alpha^2$ des Weiteren die Wahrscheinlichkeit an, dass ein Elektron mit einem virtuellen Photon auf Grund von Quantenfluktuationen etc. interagiert; ein virtuelles Photon ist räumlich durch ein $l_{PLANCK}^2$-Quadrat bzw. ein $l_{STONEY}^2$-Quadrat lokalisiert, da sie die kleinsten räumliche Einheiten repräsentieren, und alpha koppelt diese Quadrate an Ladungen, z.Bsp. ein Elektron, und gleichzeitig an das, hier virtuelle, Photon, wobei die oben angegebene Tesseraktperspektive eben konsistent zur Wahrscheinlichkeit nach Richard FEYNMAN überleitet [Diese Angaben tragen zu einem besseren Verständnis der Feinstruktur-Konstante alpha bei, da alpha somit als Mitbestimmungsfaktor für den Anteil an Dunkler Materie und Schwarzer Energie betrachtet werden kann, welcher aktuell von Nobel Prize Outreach nach James PEEBLES mit 95% angegeben wird, und sich mit alpha$^{1/2}$ ≈ 0,0854 nach 1 - 0,0854 in einer ersten Näherung ein Anteilswert von ≈ 91,5 % ergibt; allgemein sollte sich somit der Anteil an Dunkler Materie und Schwarzer Energie über eine Funktion f($\alpha^{x/2}$) abschätzen lassen, was einen Teil der Ubiquität von alpha erklären kann. Die I$_{STONEY}$-Länge lässt sich somit als der Anteil einer I$_{PLANCK}$-Länge betrachten, die elektromagnetisch mit der "Hellen Materie und Hellen Energie" ≈ "Ordinary Matter", weitgehend durch die I$_{PLANCK}$-Länge mitbestimmt, interagiert; eine Korrektur ist über die Wirkung und die Gravitation (Wird alpha$^2$ an der Massendifferenz zwischen dem Neutron und dem Proton normiert, dann erhalten wir mit ((1/137)^2) / 0.001378 ≈ 3.9 % "Ordinary Matter"-Anteil; vgl Leonard SUSSKIND 2006, S. 48.), die verbunden mit einer tesseraktoiden Komponente einwirkt, und die schwache und starke Wechselwirkung noch notwendig, was die Differenz zwischen ≈°5% (James PEEBLES und andere) und ≈°8,5% (oder 3,9°% bzw. 8,5°% - 3,9°% = 4,6°%) bzw. ≈°4,6°% nach meiner Analyse miterklärt. Metaphorisch kann das I$_{STONEY}^2$-Quadrat als ein Flaschenhals beschrieben werden, der einen großen Teil der elektromagnetischen Kraft in einer bzw. mehreren zusätzlichen KALZUZA-KLEIN-bezogenen Dimension bzw. Dimensionen (vgl. CALABI-YAU-Dimensionen), die durch das I$_{PLANCK}^2$-Quadrat des Holografischen Prinzips räumlich mitbestimmt wird, von einer Einwirkung auf die Ordinary Matter abhält bzw. abschirmt.]

An dieser Stelle der Betrachtung angelangt, ist gut festzuhalten, dass die Konsistenz des Konzeptes Würfel mit Lehne mit Seiten-Quadraten als Elektronen-Speicherelemente (z.Bsp. als quadratoide Flächen mit Metall-Ionen gleichen oder unterschiedlichen Elementes diagonal gegenüber) ebenso durch die empirischen Tatsachen unterstützt und bestätigt wird, dass sowohl Elektronen als auch Photonen vier Freiheitsgrade der Polarisation aufweisen können, was mit den vier Ecken und den vier Kanten der Seitenquadrate korrespondiert. Noch bedeutsamer ist, dass Gravitone 10 Freiheitsgrade der Polarisation aufweisen können (GAßNER & MÜLLER 2019, S. 514), was mit der Anzahl 10 der Ecken im Würfel mit Lehne Cluster bzw. mit dessen Anzahl an Atomen korrespondiert. Des Weiteren korrespondiert die Anzahl 10 der Ecken des Würfel mit Lehne Cluster mit der Zahl der Dimensionen der typischen string theories, zum Beispiel sind es bei der aktuell am bedeutsamsten M Theorie 10 Raumdimensionen und 1 Zeitdimension (Edward WITTEN), bei der Superstringtheorie 9 Raumdimensionen und 1 Zeitdimension. Der Würfel mit Lehne Cluster korrespondiert also in hohem Maße sowohl mit den Polarisationseigenschaften von Photonen und Elektronen, als auch mit den Polarisationseigenschaften von Gravitonen. Somit stellt der Würfel mit Lehne Cluster bei Berücksichtigung der Aspekte der Polarisation und der Feinstruktur-Konstanten alpha eine optimale Adaptation und Akkommodation der Biologie und der Pflanzen-Physiologie an die Prinzipien und Gesetze der klassischen und modernen Physik, insbesondere der Gravitation und der Elektrodynamik dar.

[3] Bei entsprechender Wahl von Atomen bzw. Ionen oder Molekülen für den Cluster, unter geeigneten Bedingungen oder auf Grund quantenstochastischer Prozesse können auch bereits zwei Elektronen vom Cluster abgegeben werden, so dass eine Fission von einem Molekül $H_2X$ auftritt.

[4] Reaktions-Kern im multimeren transmembranen Proteine-Pigment-Komplex. Im angelsächsischen Sprachbereich: Oxygen evolving complex of photosystem II, water-oxydizing complex of photosystem II, oxygen-evolving photosystem II etc.

[5] Die Abstände sind im einstelligen Angström-Bereich: 1 Angström = $10^{-10}$ m; Kantenlänge des "Würfel mit Lehne" um 1 bis 3,5 Å; für die Zeichnung sind im Vordergrund rund 5 cm ≈ 2 Å anzusetzen; die Kantenlängen sind variabel, also nur idealtypisch gleichlang wie gezeichnet: vgl. Nanotechnologie und Röntgenstrukuranalyse nach UMENA et al., 2011.

[6] Calcium weist als Isotop mit der Massenzahl 40 (oder 48) einen doppelt magischen Kern auf und Sauerstoff als Isotop mit der Massenzahl 16 hat ebenso einen doppelt magischen Kern. Im natürlichen MnaOsCa Cluster verfügen also 6 von 10 Ionen, also 60% der Ionen, über besonders stabile doppelt magische Kerne, die u.a. jeweils ein minimales Quadrupolmoment aufweisen. Dies stellt eine physikalische bzw. kernphysikalische Besonderheit dieses Clusters dar, welche u.a. die magnetischen Eigenschaften des Clusters optimiert. (Es sei angefügt, dass Calcium 40 und 48 sich bzgl. Spaltbarkeit zu Uran 235 wie die absolute Antithese verhalten.) Am Calcium Eck des Clusters ergibt sich sogar ein doppelt magische Kerne Triplet, was eine zusätzliche, sehr hohe Elektronenbeweglichkeit und eine besonders stabile physikalische Struktur, z.Bsp. durch geringe dysfunktionale Kernresonanzen (u.a. sehr geringe bis keine Kernspinresonanzen), ermöglicht. Dies stellt u.a. einen hohen physikalischen Wirkungsgrad des $Mn_4O_5Ca$ Clusters sicher und kann im Sinne der Evolutionsforschung (und der gerichteten Evolution, vgl. Frances ARNOLD) als Ausdruck eines objektiven Fitnessmaximums interpretiert werden. Gleichzeitig zeigt dieses Fitnessmaximum bei doppelt magischen Kernen auf, dass Spin-Effekte und (elektro-) magnetische Effekte wie der Quanten-Hall-Effekt, der somit am Calcium Eck der Würfel mit Lehne Struktur geringer ist als an anderen Stellen und Ecken des Clusters, bei der Wasserfission eine wichtige Rolle spielen. Diese hier vorgestellten Überlegungen entsprechen den empirischen von CHEN Y et al. (2022) berichteten Ergebnissen, die eine höhere Effizienz des Heteroions Calcium gegenüber Strontium im Cluster aufweisen.

[7] Die tesseraktoide, oktaedrisch-kristalläquivalente und dotierterhalbleiteräquivalente Würfel mit Lehne Struktur (z.Bsp. $Mn_4O_5Ca$) ermöglicht mit den Heteroionen Calcium oder Strontium, die unbesetzte M-3d- oder N-4d-Orbitale aufweisen, eine zumindest zweiphasige Aufnahme, Speicherung und Weiterleitung der vier Elektronen in einem zumindest drei- plus einschrittigen Prozess (i) auf Grund der Geometrie der Kantenberührungen der Seitenquadrate der Würfel mit Lehne Struktur und (ii) auf Grund der Energie-Aufspaltung der fünf d-Orbitale der fünf Metallionen in drei $t_{2g}$-d- und zwei $e_g$-d-Orbitale mit jeweils unterschiedlichen Energieniveaus im Würfel mit Lehne oktaedrischen (Quasi-)Kristall nach dem JAHN-TELLER-Theorem, da mit den Heteroionen Calcium oder Strontium, welche mit einem potentiellen d-Orbitale basierten Ladungsloch (hole) zwischen den p-Orbitalen und dem nächst distaleren s-Orbital und damit verbundenen gaps, welche mit den fünf singulär besetzten und somit halbvollbesetzten, nach der zweiten HUND'schen Regel im Optimum maximalen Spin |1/2| je Orbital und Gesamtspin S = |5/2| und somit maximalen Gesamtdrehimpuls nach J = L + S aufweisenden d-Orbitalen, also fünf ein-Elektron-Doublets mit nur Spin 1/2 oder nur -1/2 jeweils, von Mangan mit der atomaren Elektronenkonfiguration [Ar] $3d^5 4s^2$ im oktaedrischen Kristall mit dessen elektro-magnetischen Oktruierungsmöglichkeiten, insbesondere bei Verfügbarkeit von Protonen, die vier Mangan-Ionen (auf eben das eine Ca- oder Sr-Dotierungs-Ion mit ihren potentiell unbesetzten d--Orbitalen oder Valenz-s-Orbitalen hin) korrespondieren.

[8] Die Lehne (oder auch Henkel im topologischen Sinne, sofern von einem Elektron "in der Mitte" abstrahiert wird) führt zu einer relativen Asymmetrie der Würfelstruktur und kann metaphorisch als Ratschenzacke mit Haken im Sinne einer FEYNMAN'schen Ratsche gesehen werden, ohne die Probleme einer thermischen Maschine (vgl. BROWN'sche Motoren) aufzuweisen. Des Weiteren kann die Lehne als Übergangselement bzw. als Übergangsstruktur zu einem (reduzierten) Tesserakt aufgefasst werden und so einen Bezug zu Quantengravitationsaspekten, CALABI-YAU-Dimensionen und einer KALUZA-KLEIN-Dimension andeuten oder herstellen. Hier sei angeführt, dass Quadratkoordinaten im dreidimensionalen Raum wie $x_1 x_2 x_3 x_4$ (allgemein $x_i x_j x_k x_l$) ad hoc als Eckkoordinaten in einem vierdimensionalen Raum aufgefasst werden können und so meine Darstellung einen direkten mathematischen Bezug zu einem Tesserakt (bzw. Tesseraktoid) im vierdimensionalen Raum aufweist, was die Konsistenz des bisher gesagten unterstreicht (Marcus du SAUTOY, 2012).

Die Lehne hat dabei eine besondere Relevanz bei einer Mitwirkung der Gravitation bei den Prozessen der Photosynthese und ermöglicht eine Optimierung der gravitativen oder 2h-bezogenen Anteile bei physiochemischen, im weitesten Sinne oszillatorischen Prozessen, einschließlich Quanten-oszillatorischen Prozessen, wie sie ja bereits von Pierre JOLIOT beschrieben wurden.

[9] Es sei darauf hingewiesen, dass die beiden Elektronen der gegenüberliegenden Quadrate $x_1, x_4, x_8, x_5$ oder $x_2, x_3, x_7, x_6$ mit Distanz d ≈ 2 Å (oder auch in Relation zum, bei dessen Vorherbesetzung mit einem Elektron, mit d ≈ $6^{1/2}$ Å weiter entfernten Lehnenquadrat $x_7 x_8 x_9 x_{10}$)

auch als energetisch bevorzugtes Quasi-Cooper-Elektronen-Paar zu interpretieren sind, was eine Besetzung dieser Quadrate in Bezug zum Lehnen-Quadrat auszeichnet und den Elektronen-Transfer im Sinne der Konzepte der Supra-Leitungsfähigkeit beim Transfer von den beiden Wassermolekülen in den Cluster, besonders aber im Cluster und aus dem Cluster heraus erleichtert; auch erleichtert die Bildung eines (Quasi-) Cooper-Elektronen-Paares die Aufnahme des dritten und vor allem auch des vierten Elektrons in die Würfel mit Lehne Struktur, da ein Cooper-Elektronen-Paar als stapelbares Quasi-Boson aufgefasst werden kann. Der Cooper-Elektronen-Effekt hat dann eine besondere Bedeutung bei der gegebenen sterischen Struktur, da (i) die Elektonenpaare dann stapelbar sind und (ii) die (beiden) Wassermoleküle an entgegengesetzten Stellen an der Würfel mit Lehne Struktur bevorzugt andocken können; ja, damit bleibt sogar eine basale sterische Symmetrie gewahrt. Die angeführte Relevanz von COOPER Elektronen Paaren ist konsistent mit den einschlägigen Studien, u.a. mit Hilfe der EPR Spektroskopie, zu den Spin Zuständen des $Mn_4 CaO_5$ Clusters (vgl. BOUSSAC et al. 2009 oder NAJAFPOUR et al 2012, 2016/2017: Deren g-Werte-Angaben lassen sich sowohl im Sinne von einem oder mehreren COOPER-Elektronen Paare mit geradzahligen Spin als auch im Sinne der Ko-Wirksamkeit von Spin 2h Gravitonen interpretieren, was diese Autoren allerdings nicht tun.). Es sei hinzugefügt, dass der Standard Modell Lagrangian bis hin zur % $F_{uv} F^{uv}$ Struktur mit diesen Überlegungen übereinstimmt, da eben mit 4 Photonen-Äquivalenten bzw. mit den daran gekoppelten 4 Elektronen der % Vor-Faktor der Bosonen-Komponente des Standard Modell Lagrangian in einen ganzzahligen Wert überführt wird und so die basalen Symmetrie- und Algebra-Aspekte des Standard Modell Lagrangian klar ("-¼ $F_{uv} F^{uv}$" + "Fermionenanteil iψ' D/ψ" gegen 0 + ε, ε hier arbiträr klein, als Ausdruck einer Symmetrie im Sinne der Quantenelektrodynamik etc.) und evident im Rahmen der Würfel mit Lehne Struktur erhalten bleiben, da in den anderen relevanten Teilen der Vor-Faktor des Standard Modell Lagrangian 1 ist [vgl.: Bosonen am Beginn der Energieübertragungskette: 4 * 4 * 3 *5 * (2*5) ≈ 2400 Chlorophyll-Molekül- (vgl. EMERSON & ARNOLD 1932) bzw. Photonen-Äquivalente (Bosonen) übertragen Energie und Impuls auf 4 Elektronen] (u.a. PBS https://voutu.be/PHiyQID7SBs , zuletzt aufgerufen 21.10.2022); bei Exzitonen und (Quasi-)COOPER-Paar Zwischenschaltung wird allerdings der Faktor 2 bestimmend, der ja bereits in 4 = 2 * 2 enthalten ist. Aus dieser Standard Modell Lagrangian Perspektive ist (i) die Würfel mit Lehne Struktur direkte Folge des Vorfaktors ¼ bei $F_{uv} F^{uv}$ und stellt im Sinne von Jean PIAGET und Wilhelm OCKHAM eine besonders einfache und elegante höchstadaptive physikochemische Struktur dar, die eine Anpassung der Biosphäre an die Prinzipien der Quantenphysik und des Standard Modells der Physik darstellt; ebenso ist (ii) aus den vorgenannten Gründen (% als Vorfaktor bei $F_{uv} F^{uv}$) der Faktor 4 als Ladungsquantenfaktor (Fermionen) im KOK-Zyklus und im Sinne der Oszillationen mit Periode 4 beim $O_2$ Ertrag der Lichtblitz-Untersuchungen (d.h. Photonen = Bosonen) der Photosynthese nach Pierre JOLIOT (Es sei angefügt, dass die Photonen-induzierte Rotation von cis- zu all-trans-Retinal und die über die länger andauernde enzymkinetische chemisch vermittelte Rückrotation von all-trans- zu cis-Retinal die Dämpfung der JOLIOT'schen Periode-4-Oszillationen erklärt; weiterführende Feststellung: Da nach der Literatur von JOLIOT typischerweise 5 Oszillationen bzw. Maxima dargestellt werden, könnte die Anzahl der 20 bis 40 Retinalmoleküle pro Photosystem I Einheit über 20/5 = 4 oder 40/5 = 8 = 2 * 4 auf eine Konsistenz der hier vorgestellten Überlegungen, einschließlich der (pi) (2h) Entkoppelung, verweisen; allerdings ist dann klar keine 1:1 Quanten Übertragung im Sinne der starken Form des STARK-EINSTEIN-Gesetzes der Photochemie gegeben, jedoch allerdings im Sinne einer allgemeinen n:1 Form des STARK-EINSTEIN-Gesetzes, da geradzahlige Vielfache n:1 bzw. n*4:4 gegeben sind.) im Sinne von Jean PIAGET und Wilhelm OCKHAM eine besonders einfache höchstadaptive physikochemische Struktur, die eine Adaptation der Biosphäre an die Prinzipien der Quantenphysik bis hin zum Standard Modell der Physik darstellt (Die tesseraktoide Würfel mit Lehne Geometrie stellt somit sowohl eine Optimierung physikochemischer Oszillationsprozesse von Ladungen als auch eine Optimierung physikochemischer Oszillationsprozesse von gravitativ wirksamen Massen dar. Es sei an dieser Stelle noch angeführt, dass das special pair in der Regel nach BARBER (2012) als Chlorophyll Tetrade mit 4 Chlorophyll a Molekülen in Erscheinung tritt. Persönliche Anmerkung: Ich möchte auf die sehr große Bedeutung dieser Anmerkungen für die Wissenschaft und die Menschheit hinweisen.)

[10] Besonders ausgezeichnet als Akzeptorquadrat für das vierte (z.Bsp. S4+ Zustand nach Bessel KOK) Elektron ist das Quadrat $x_1x_2x_3x_4$, da es maximalen Abstand zum Henkelquadrat $x_7x_8x_9x_{10}$ hat [nach Pythagoras bei 2 Å Kantenlänge d(Quadratmitten) $\approx (9 + 1)^{1/2}$ Å = $10^{1/2}$ Å; für das Frontquadrat ergibt sich d(Quadratmitten) $\approx 8^{1/2}$ Å; selbstverständlich kann auch das zweite Elektronenpaar als (Quasi-)Cooper-Elektronen-Paar aufgefasst werden, da die Bildung von Cooper-Elektronen-Paaren bis zu einer Distanz der Elektronen von rund $\approx 4$ Å möglich ist (vgl. D. MESCHEDE, Hrsg.: GERTHSEN Physik. 2015, S.922; zur Diskussion der Relevanz von Cooper-Elektronen-Paaren vgl. aktuell: Robert F. SERVICE, 2023; DASENBROCK-GAMMON, N., SNIDER, E., MCBRIDE, R. et al. 2023; Hiranya PASAN, Elliot SNIDER, Sasanka MUNASINGHE et al, 2023. Die Würfel mit Lehne Struktur entspricht über die 3D Struktur des Würfels weiterhin zumindest partiell dem MERMIN-WAGNER-HOHENBERG-Theorem der theoretischen, statistischen Physik einschließlich dessen Limitierungen - vgl. die Lehne - und kann so als sehr gute evolutionäre Adaptation an die Grundbedingungen optimaler Leitung von Ladungen und Fluidität aufgefasst werden.)]. Die Bildung eines COOPER-Elektronen Paares erhöht die Wahrscheinlichkeit der Elektronenansammlung im Cluster und der Elektronenabgabe, auch unter potentieller Mit-Wirkung von Pseudogap-Regime-Ereignissen, aus dem Cluster von den $H_2O$ Molekülen weg.

Im Sinne der BCS-Theorie (mikroskopische Theorie zur Wechselwirkung der Elektronen mit den masseabhängigen, quantisierten Gitterschwingungen des "Leiters" nach John BARDEEN, Leon Neil COOPER und John Robert SCHRIEFFER) können die vier Elektronen dann als zwei Bosonen "gestapelt" im Sinne eines "metaphorischen" zwei Teilchen Laser Strahles (also doppelter Vorteil der Bildung von Cooper Elektronen Paaren) und so einem sehr geringen Widerstand ausgesetzt aus der Würfel mit Lehne Struktur mit Quasi Supraleitung über das Ca-Eck-Ion (oder auch Sr-Eck-Ion etc.) weitergeleitet werden (z.B. zu einem Tyrosin wie TyrZ bzw. D1Tyr161, welches oft mit einem D1His190 korrespondiert). Dies erklärt ggf. einiges bisher rätselhaftes an der Effizienz der Photosynthese. Es sei darauf verwiesen, dass der Standard Modell Lagrangian auch über einen Vorfaktor ½ anstatt ¾ beim Bosonenanteil $F_{uv}F^{uv}$ beschrieben werden (BUCHMÜLLER W. und LÜDELING C., 2006); ein scheinbarer Widerspruch würde sich hier auflösen. Hier sei angeführt, dass Exzitone oder Sopgar COOPER-Elektronen-Paare [der Abstand der Mg-Ionen etc. beträgt in der Regel weniger als 4 bis maximal 5 Å, also können ebenso dort sehr gut COOPER Elektronen Paare gebildet werden; vgl. HARVEY Pierre D. 2014: es sei angeführt, dass die für special pairs besonders bedeutsamen n-n- und $\pi$-Kation-Wechsetwirkungen und -Stapel-Bindungen über Quadrupol Darstellungen beschrieben werden, die dem Quadrupol bei GEIER's NEWTON's Cradle (GEIER 2019, 2022) vergleichbar sind und auch hier eine Verbindung zwischen den Konzepten vorhanden ist; des Weiteren zeigt Figure 15 left von HARVEY 2014 den typischen Dämpfungsverlauf von GEIER's NEWTON's Cradle] vom Chlorophyll Special Pair bzw. Antennenpigmenten (hier insbesondere P680 und P680*, aber ebenso bei P700 und P700* oder B800 bzw. B850) oder geeigneten Halbleitern einen Elektronensog bzw. Elektronengradienten aufbauen, der Cooper-Elektronenpaare "stapelbar" bzw. sogar "kohärent" (da sowohl Exzitone als auch Cooper Elektronenpaare stapelbare Bosonen sind), mit sich ziehen kann (Metapher: "Wasserstrahlpumpe" für Bosonen und Fermionen). Es sei ergänzend angeführt, dass in der $Mn_4O_5Ca$ (nach UMENA et al. , 2011) Henkel mit Lehne Struktur (Zeichnung 2) die O-Atome so angeordnet sind, dass jede der 7 Flächen der Würfel mit Lehne Struktur über die jeweils vorhandene O-O-Flächen-Diagonale, allein aus Gründen der Elektronegativität von Sauerstoff (3,44 in Vergleich zu Mn mit 1,55 und Ca mit 1), mit einer Länge von $8^{1/2}$ Å $\approx 2,83$ Å ein (oder zwei) $H_2O$ mit einer Hypotenusenlänge (Hypotenuse im weiteren Sinne) von 1,51 Å (Cosinussatz mit y = 104,45° und H-Schenkellänge = 0.9584 Å) sterisch geordnet in Form einer Quasi-Quadrat-Pyramide mit dem O-Atom des Wasseratoms als Pyramidenspitze, über Wasserstoffbrücken etc. binden bzw. adsorbieren bzw. fixieren kann. Das O-Atom in der Pyramiden-Spitze ist dann relativ besonders nahe an einem der vier KOK-Zyklus-Elektronen-Akzeptorstellen im Bereich der Mitte eines der Quadrate der Würfel mit Lehne Vorrichtung und kann Elektronen vom $H_2X$ Molekül besonders leicht sequentiell aufnehmen, da das Elektron bzw. Elektronenpaar gleichzeitig mit den beiden diagonal gegenüber gelegenen positiv geladenen, unterschiedlich stark bis sehr stark oxidierten (z.Bsp. von Ca[II] bis Mn[V]) Metallionen interagieren kann, was die $H_2O$ bzw. $H_2X$ Spaltung ermöglicht.

Es entstehen bei Wasserüberschuss, welcher bei UMENA et al., 2011, beschrieben ist, also 7 bis 8 Quasi-Pyramiden (am Henkel 2 mögliche Pyramiden, wobei allerdings die vordere Quasi-Pyramide mit der Dach-Quasi-Pyramide interferiert), deren Symmetrie durch das Ca-Atom reduziert ist; das Ca-Atom ist somit aus sterischen Gründen (die dortigen 2 bis 3 Pyramiden neigen sich zum Ca-Atom) und konfundierten Gründen der geringeren Elektronegativität von Kalzium ein Ansatzpunkt für einen Reaktionsbeginn. Die Längendifferenz von 2,83 Å -1,51 Å = 1,32 Å destabilisiert bereits die Atom-Bindung der beiden H-Atome an das Pyramidenspitzen-O-Atom im Wassermolekül und bereitet die Wasserspaltung mit der Abgabe der zwei bzw. vier Elektronen nach Bessel KOK vor; die sterische Würfel mit Lehne Struktur nach der dreidimensionalen Elektronegativitätsstruktur von $Mn_4O_5Ca$ hat also drei unterschiedliche Ansatzpunkte für eine Spaltung von $H_2O$ bzw. $H_2S$ oder $H_2X$-Molekülen [1,69 Å Hypotenusenlänge bei $H_2S$; da 1,51 Å < 1,69 Å ist der Stress auf $H_2O$ im Würfel mit Lehne System größer als auf $H_2S$ und so sollte $H_2O$ ein leichter zu spaltendes Substrat im Vergleich zu $H_2S$ sein; vgl. evolutionäres Überwiegen der Wasserspaltung. Es sei noch darauf hingewiesen, dass elementarer Schwefel am häufigsten als 16er Einheiten von (Cyclo-) Octaschwefel, also als orthorhombischer $\alpha$-Schwefel, in der Natur vorkommt: dies korreliert sowohl mit der 8-fachen $H_2S$ Pyramidenstruktur (8 $H_2S$ Moleküle seien angelagert) meiner partiell orthorhombischen Würfel mit Lehne Vorrichtung, als auch mit meinen Betrachtungen zum % Vorfaktor beim Bosonenanteil des Standard Modell Lagrangian.].

Es sei noch darauf verwiesen, dass die freien, unbesetzten M-3d Orbitale von Calcium oder die N-3d Orbitale von Strontium etc. des Weiteren eine Weitergabe der Elektronen aus dem MnaOsCa- oder $Mn_4O_5Sr$-Cluster (oder sogar $Mn_4O_5Y$-Cluster; vgl. HOU H, 2023) hinaus erleichtern (GEIER et al. 2023); das Calcium oder Strontium Ion lenkt die Elektronen aus der Würfel mit Lehne Struktur heraus, was wir uns ähnlich einer Septum-Ablenkelektrode (deflection plate) eines Cyclotrons [allerdings für nur 4 Elektronen oder zwei Cooper Elektronen Paare (wir befinden uns bei der Betrachtung des Clusters im Größenordnungsbereich von ≤ ≈4 Å, also im einstelligen Ängströmgrößenbereich); jedoch ergibt sich bei einer Iteration der Wasserspaltungen n * 4 Elektronen mit n aus der Menge der natürlichen Zahlen] vorstellen können; dieses Konzept definiert eine Elektronen-Kanone, auf Grund der COOPER Paare ähnlich einem LASER, im Å bzw. Picometer-Nanometer Größenbereich ("Cyber-Knife" Radiotherapie bzw. Radiochirurgie Anwendungen, z.B. im Bereich der Melanome, sind möglich.).

Bedeutsam ist im pico- und nanotechnologischen Größenbereich des Weiteren, dass d-Orbitale-Interaktion der besetzten und unbesetzten d-Orbitale der Mangan Ionen mit den "freien", "unbesetzten" d-Orbitalen von Ca oder Sr eine Wege-Divergenz der vier abzugebenden Elektronen auf Grund des Spin-HALL-Effektes reduziert oder ausschaltet und so die Effizienz des Elektronentransports im Photosynthese II Dimer und den Elektronentransportketten und der Photosynthese insgesamt erhöht; das Heteroion Ca oder Sr wirkt somit als Spin-HALL-Gleichrichter, der mit einer Effizienzsteigerung einhergeht.

Der Spin-HALL-Effekt bezogene Spin-Gleichrichter-Effekt des $Mn_4XO_5$ Clusters ist vom ebenso für die $H_2X$-Spaltung und den Elektronentransfer zum Heteroion, zum special pair bzw. der speziellen Tetrade relevanten Quanten-HALL-Effekt nach Klaus von KLITZING zu unterscheiden, den ich bereits vor einigen Jahren für den KOK-Zyklus aufgewiesen habe, der sich über $\pi\, e^2 = \pi\, h\, R_K$ nach $R_K = h/e^2$ via $4\pi\varepsilon hc\alpha = e^2$ ergibt und die Zeit-Progression ($\approx$: 30 µs → 100 µs → 350 µs -> 1000 µs) um den Faktor ≈3 (bzw. ≈π) bei der Elektronen-Akzeptanz am MnaXOs Cluster beschreibt und zu $R_K$ in Beziehung setzt. Im Kontext sind auch die magnetischen Effekte der Elektronen der einfach besetzten d-Orbitale im Cluster (vgl. HUND'sche Regeln der Physik und der Chemie) zu beachten.

So ergeben sich mehrere Vorzüge der beschriebenen Würfel mit Lehne Struktur, welche mit einem Bricolage Evolutions Konzept (vgl. Eric KANDEL oder Adam S. WILKINS), das hier aber auch die "Gesetze" oder Anpassungsanforderungen der Quantenphysik und des Standard Modells, beides als "Designgrundlage" im weiteren Sinne, miteinbeziehen kann, sehr gut übereinstimmen. Es ist anzunehmen, dass die cubischen bis cuboiden $Fe_4S_4X_i$...-Cluster des Photosystem I der Photosynthese etc. verwandte Funktionsgrundlagen aufweisen (vgl. die Überlegungen zum last universal common ancestor LUCA von WEISS et al. 2016); man betrachte auch die cuboide $Fe_4S_4(SMe)_4$ Struktur der $Fe_4S_4$-Ferredoxine (z.Bsp. die High-potential Eisen-Schwefel-Proteine von Anaerobiern) und vor allem die doppelt cuboide und so tesseraktoide Struktur des Nitrogenase FeMo Kofaktors $Fe_7MoS_9C$, der sich u.a. bei Cyanobacteria bzw. Pseudomonadota findet (REIHER et al. 2017); bitte beachten Sie die Konsistenz über die N-Schalen-$4d^5$-Orbitale von Molybdän mit den M-Schalen-$3d^5$ Orbitalen von Mangan in unseren $Mn_4O_5Ca$ bzw. $Mn_4O_5Sr$ oder $Mn_4O_5X$ Clustern.

[11] "The S4+ state produces 02 and returns to the ground state S0." KOK B, FORBUSH B, McGLOIN M (June 1970). "Cooperation of charges in photosynthetic 02 evolution-I. A linear four step mechanism". Photochemistry and Photobiology. 11 (6): 457-475. doi:10.1111/i.1751-1097.1970.tb06017.x. PMID 5456273. S2CID 31914925.

[12] Eine zusätzliche Potentialkomponente $\Delta\Phi$ auf Grund des Gravitationsfeldes der Erde und der Eigenmasse der beteiligten Masseträger (auch Photonen) kann aus meiner Sicht sinnvoll hinzugefügt werden, insbesondere auch im Bereich der vorangehenden Photonen-Absorption in den Antennenpigmentanteilen, da über den Unterschied des Spins der beiden Bosonen Photonen (Spin 1) und Gravitonen (Spin 2) der Faktor 2 als Optimierungsfaktor, zusammen mit dem Faktor 1/4 der Bosonen in der Lagrange-Dichte, für die Antennenpigment-Wirkungsgrad-Relationen erklärlicher wird, und um die Photosystem-II-Proteinkomplex-Dimerisierung mit nur einem hauptaktiven Monomer besser zu erklären.

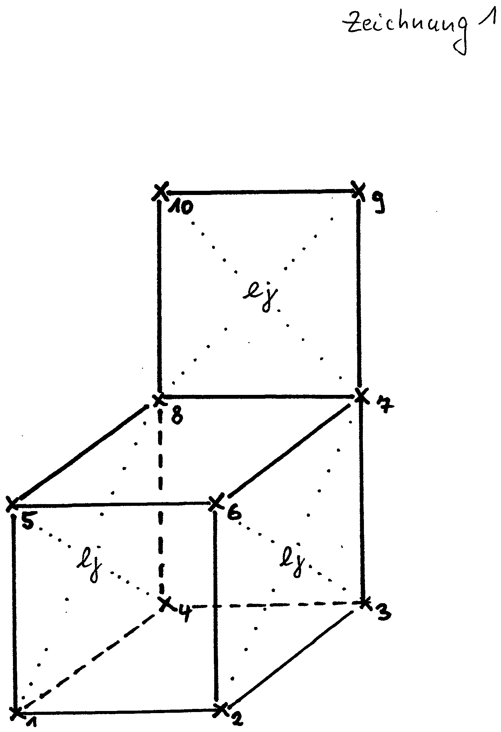

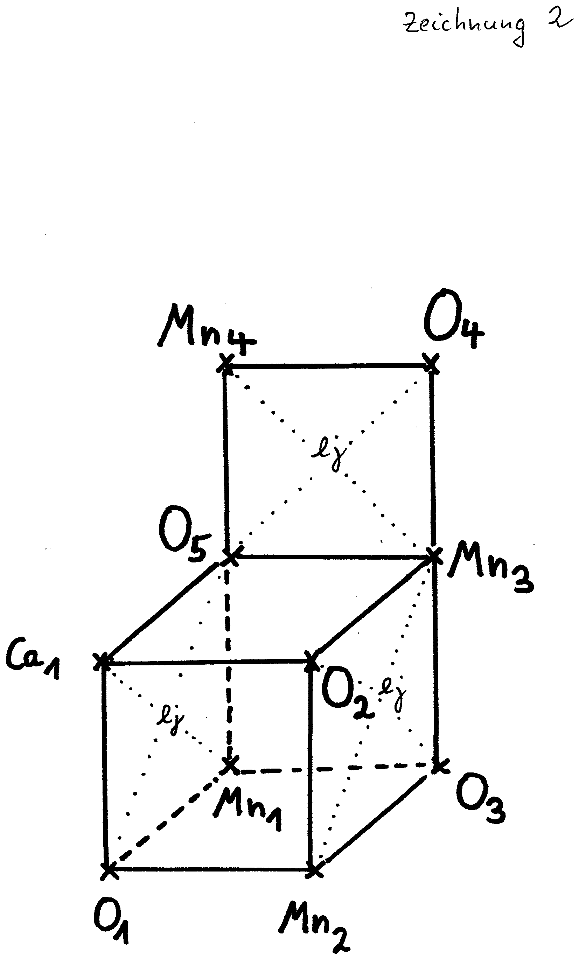

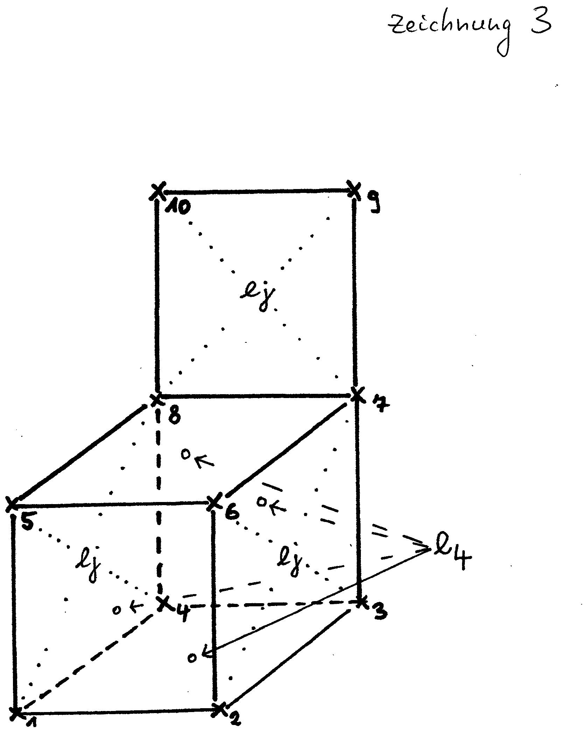

[13] Ich darf im bionischen Kontext auf die Korrespondenz und Valenzelektronen-Gleichheit zwischen dem Ca oder Sr Ion eines $Mn_4O_5Ca$ oder $Mn_4O_5Sr$ Clusters und dem Nichtvorhandensein eines Mg Ion im ersten Elektronenakzeptor Pheophytin, eben ein Chlorophyll ohne das $Mg^{2+}$-Ion im Porphyrin Grundgerüst, im Photosystem II-Multimer-Pigment-Protein-Komplex hinweisen; allerdings fehlt bei Mg als Element der dritten Periode mit $1s^2 2s^2 2p^6 3s^2$ Konfiguration die d-Orbital-Komponente; des Weiteren ist das (virtuelle) $^{2+}$ Loch im Pheophytin $\approx <25$ Å entfernt (die Weglänge über das special pair bzw. die spezielle Tetrade aus vier Chlorophyll a Molekülen ($P_{D1}$, $P_{D2}$, $Chl_{D1}$, and $Chl_{D2}$ nach James BARBER) ist wohl mit $\approx 50$ Å etwa doppelt so lang: Abbildung 3.B von James BARBER). Das Hetero-Ion im Cluster kann somit als Hauptgruppen-gleicher (relativer) Fern-Ersatz für das Mg-Ion im Pheophytin in basale biochemische und biophysikalische Überlegungen einbezogen werden und als Bauprinzip angesehen werden, welches einen Elektronen-Transfer vom Cluster zum Pheophytin über eine anorganisch-organische Ladung-Loch-Relation erleichtert, wobei die typische 2+ Redoxstufen von Ca oder Sr und Mg einen Transfer von Elektronen als Paaren, auch als (Quasi-) COOPER Elektronenpaaren (hier sind selbstverständlich auch Pseudogap-Regime-Aspekte besonders relevant, insbesondere, da ja weitgehend nur für die Elektronen des Clusters der gap oder das Loch auf dem Weg zum bzw. am special pair (bzw. spezielle Tetrade nach J BARBER) oder zum bzw. am Pheophytin relevant ist; auch eine Dekopplung von (Pseudo-) COOPER Paare ist gegeben, die oft mit einer Energiefreisetzung verbunden ist und so die Reversibilität der Elektronentransportprozesse einschränkt), erleichtert bzw. ermöglicht. Die Konzepte dotierte Halbleiter, vgl. das Heteroion als Dotierung im MnO Kristall, Ladungslöcher und Exzitone etc. erlauben auch bei einer Distanz von $\approx 2,5$ nm oder etwas mehr der korrespondierenden Stellen eine kausale Interaktion, d.h. eine bevorzugte gerichtete und Entropie schaffende Elektronenweitergabe, zu formulieren: Dabei schafft die Distanz von $\approx 25$nm dem Photosystem II die Möglichkeit, in genau der Ladungsflussrichtung vom Heteroion des Clusters zum Pheophytin hin die maximal bis $\approx 10$nm weit reichenden (Photonen-,) FÖRSTER- und DEXTER-Energietransfer-Prozesse in einen auf Grund der Distanz von $> \approx 15$ nm von diesen primären Energie-, Wirkungs-, und Impuls-Flussrichtungen unabhängigen gerichteten sekundären Energie-, Wirkungs-, und Impuls-Strom umzusetzen, wobei relativ zu den überwiegend ("hemispheroid" bei Cyanobacteria bzw. Rotalgen oder "cylindroid" bei Pflanzen) "zentripetalen" Photonen-, FÖRSTER- und DEXTER-Energie-, Wirkungs-, und Impuls-Transfer-Prozessen eine gewisse Negentropie mit einer Ladungstrennungskomponente, die als eine Grundlage der biologischen Protizität nach Peter MITCHELL betrachtet werden muss, vom Cluster weg zur "Außenseite" einer Membran, Barriere oder entsprechenden sterischen Strukturen erreicht wird (vgl. BARBER, James 2012).

[14] Also fließen nach dem Z-Schema (GOVINDJEE et al. 2002, 2003) der Photosynthese die Elektronen von einem $Mn_4CaO_5$ Tesseraktoid mit vier $e^-$-speicherungsrelevanten Viereck-Flächen bzw. Tesseraktoidecken zu einer $Fe_2S_2$ Viereck Fläche (z.Bsp.: MARTINEZ-JULVEZ M et al. 2001; man beachte dort bitte Tyr25 und Tyr98, beide ähnlich zum D-1-Tγr161 = TyrZ; ähnlich ebenso u.a. eine $Fe_2S_2$ Viereck-Fläche im Ubichinon-CoA-Cytochrome bf Komplex) im Sinne einer Tesseraktseite oder eine Tesserakt-Ecke oder sogar zu einem Tesseraktoid wie bei $(Fe_2S_2)_nMo$ ...-Ferrodoxinen. Auch hier sei auf die Konsistenz der empirisch begründeten semantischen Verknüpfungen verwiesen.

[15] The Nobel Prize in Chemistry 1988. NobelPrize.org. Nobel Prize Outreach AB 2022. Tue. 18 Oct 2022. https://www.nobelprize.org/prizes/chemistry/1988/summary/ "The Nobel Prize in Chemistry 1988 was awarded jointly to Johann Deisenhofer, Robert Huber and Hartmut Michel "for the determination of the three-dimensional structure of a photosynthetic reaction centre"

[16] Nach meiner wohlbegründeten Theorie (Evidenz: 2h Aspekt einer Tesserakt Hauptdiagonale: GEIER Stefan, 2021b, Blogger) und ebenso der von Kip THORNE erlauben Tesserakt-oide sterische Anordnungen von Atomen bzw. Molekülen bzw. sterische Anordnungen gemäß einem Tesserakt eine optimale Nutzung und Mitnutzung gravitativer Effekte im technischen Bereich. Nach meiner Erfahrung und meinem Dafürhalten erlauben Tesserakt-oide sterische Anordnungen bzw. sterische Anordnungen gemäß einem Tesserakt ebenso die optimale Einbeziehung gravitativer Effekte und Ko-Effekte in chemische, biochemische und biologische Prozesse und Reaktionen, dies insbesondere auf einer Quanten-physikalischen und Quanten-chemischen Ebene (Evidenz: z.Bsp. SLATER type orbital functions bei GEIER Stefan, 2022b, Blogger).

In diesem Kontext möchte ich die Behauptung aufstellen und als begründete Theorie zu Excitation Energy Transfer (EET) Ereignissen etc. einführen, dass der FÖRSTER Resonanz Energie Transfer (Fluoreszenz Resonanz Energie Transfer, FRET) über 2h Gravitonen mitvermittelte kollisionsfreie Prozesse stattfindet, wofür auch die 10nm Grenze technischer Anwendungen des FÖRSTER Energie Transfer spricht (Evidenz: Bspe.: Markierungen in der Biochemie; Multipolentwicklung für das Nahfeld) und, dass Exchange Exzitation Energy Transfer (EEET) Ereignisse nach DEXTER (DEXTER-Energietransfer) etc. mit einer geringeren Reichweite bei einer ≈1nm Distanz-Grenze über 2h Gravitonen mitvermittelte mikrokollisionsassoziierte Prozesse (hinweisende Evidenz an Hand der einschlägigen DEXTER Energie Transferrate $" J e^{-\frac{2r}{L}} "$: für G = h * n * Dimension-Angleichungsfaktor bzw. für G = 1 gilt wegen

$$l_{Planck} = \sqrt{\frac{\hbar G}{c^3}}$$

offensichtlich, dass DEXTER's r = $l_{Planck}$ * m = h mal Concartinationsfaktor ist; somit erscheint dann im Nenner des Exponenten 2h als grundlegende PLANCK'sche Basiseinheit bzw. Einheit im Bereich der PLANCK Skala, also $" J e^{-\frac{2h * n}{L}} "$) stattfindet. Im Kontext der PLANCK Skala sei darauf hingewiesen, dass eine Normierung von $G_{PLANCK}$ auf $G_{PLANCK,EINSTEIN-HILBERT}$ = 1/8pi = 1/25,13274 ≈ 4 * 10$^{-2}$, wie ebenso möglich (somit ist auch GEIER's Pendel Gleichung: 2h = h / pi hier relevant; des Weiteren ist über pi = h / 2h und den Quadrupol-Aspekt unserer Pendelgleichung und die Multipolentwicklung bei Dipol-Dipol-Interaktionen direkt der Bezug zum 6th-power-law und den Nahfeldaspekt des FÖRSTER Resonanz Energie Transfers gegeben), den für die Photosynthese und das Standard-Modell relevanten Faktor 4 (vgl. WARBURG-EMERSON-GOVINDJEE Midwest Gruppe Debatte und 4 Elektronen als 4 Ladungs-Quanten beim KOK Zyklus) bzw. % (Bosonen bzw. Photonen Vorfaktor) in die Diskussion einbringt, was die Konsistenz der vorgebrachten Überlegungen unterstreicht. Es sei konsistenzorientiert (CB?:)) zusätzlich angefügt, dass der Photosynthesewirkungsgrad oft mit 23-26% (SHARKEY 1988; Chemie.de 2023; aber auch 20% bis 35,5% für die Lichtreaktion; vgl. allerdings KLEIDON A 2021 mit 1,8% bis maximal, agrartechnologisch kulturell optimiert, 3% für die Gesamtreaktion im planetaren ökologischen Setting; ein Wert von 1,8% Wirkungsgrad erinnert den mit der Relativitätstheorie vertrauten an den Vorfaktor der EINSTEIN-HILBERT Wirkung 16pi bzw. 1/16pi = 0,01989, was die Theorie ermöglicht, dass die Effizienz der Photosynthese unter Berücksichtigung von Gravitation und Elektrodynamik (wegen der PLANCK Skala mit G propotional zu 1/8pi) im Gesamtsystem Planet Erde einen Wirkungsgrad von 1,8% / 1,989% = 90% aufweist: Hatte dies etwa Otto WARBURG im Sinn?) angegeben wird; ein Photosynthesewirkungsgrad von 25% entspricht genau dem Faktor 4, wie es im nächsten Schritt indirekt ≈1/8pi oder direkt dem % Vorfaktor für Bosonen des Standard Modell Lagrangian (siehe unten) entspricht; für den wohl realistischsten Wert von 23% erhalten wir somit mit 23 % * 4 = 92 % ebenso über die Wirkung im Sinne des Standard-Modell-Lagrangian fast genau den von Otto WARBURG 1950 angegebenen (zumindest bisher völlig im plausiblen, nicht einleuchtenden) Wert von ≈90% Wirkungsgrad :). An dieser Stelle ist relevant, dass nach SHEVELA Dimirty et al. (2023) KOK's double hit und miss Modell, welches die einschlägigen Falsifikationsversuche überstanden und den Test der Zeit bestanden hat, für das Photosystem II einen Wirkungsgrad von 90% auf Grund der mathematischen Modellierungen ergibt.

**Basale Literatur:**

Ames W, Pantazis DA, & Neese F: Einblicke in das faszinierende Kraftwerk der Natur: das wasserspaltende System der Photosynthese. Forschungsbericht 2010 - Max-Planck-Institut für Chemische Energiekonversion; 2010; https://www.mpg.de/1182054/Photosynthese Wasseroxidase, letzter Aufruf 27.06.2023

Barber, James: Photosystem II: The Water-Splitting Enzyme of Photosynthesis. Cold Spring Harbor symposia on quantitative biology. 2012, 77. 10.1101/sqb.2012.77.014472; DOI: 10.1101/sqb.2012.77.014472; erstmals gefunden und aufgerufen über Research Gate am 22.06.2023

Bhowmick A, Hussein R, Bogacz I et al: Structural evidence for intermediates during O2 formation in photosystem II. Nature 617, 629-636 (2023). https://doi.org/10.1038/s41586-023-06038-z aufgerufen am 27.06.2023

Björn LO, Shevela D & Govidnjee: What is photosynthesis ? -A broader and inclusive view. In: Dalal V, Misra A (Eds) A closer look at photosynthesis. Nova Sience Publishers 2023, in press, präprint internet Govindjee homepage https://www.life.illinois.edu/govindiee/recent papers files/BSG(2023) compressed.pdf aufgerufen am 21.06.2023

Boussac A, Sugiura M, Rutherford AW, Dorlet P: Complete EPR spectrum of the S3-state of the oxygen-evolving photosystem II. J Am Chem Soc. 2009 Apr 15;131(14):5050-1. doi: 10.1021/ja900680t. PMID: 19320479.

Buchmüller Wand Lüdeling C: Field theory and the Standard Model. 2006, https://cds.cern.ch/record/984122/files/p1.pdf

Chemie.de: Photosynthese. https://www.chemie.de/lexikon/Photosvnthese.html (retrieved 16.06.2023)

Chen Y, Xu B, Yao R, Chen C and Zhang C: Mimicking the Oxygen-Evolving Center in Photosynthesis. Front. Plant Sci. 13:929532 (2022). doi:

10.3389/fpls.2022.929532

Dasenbrock-Gammon N, Snider E, McBride R. et al.: Evidence of near-ambient superconductivity in a N-doped lutetium hydride. Nature 615, 244-250 (2023). https://doi.org/10.1038/s41586-023-05742-0

Emerson R, Arnold W: The photochemical reaction in photosynthesis. J Gen Physiol. 1932 Nov 20;16(2):191-205. doi: 10.1085/jgp.16.2.191. PMID: 19872698; PMCID: PMC2141200.

Gaßner Josef & Müller Jörn: Können wir die Welt verstehen? S Fischer 2019[2]

Geier Stefan, Caroline Geier, Stephanie Geier, Katharina Geier, Constantin Geier, and Michèle Geier-Noehl: "Essay": Eine Theorie über die Besonderheit und deren Begründetheit des Kalzium Atoms, 20Ca, als Ion im Mn4O5Ca Cluster des Wasserspaltenden Komplexes der Photosynthese II. Mit anhängenden Kommentaren Mar 18 2023 und Apr 18 2023; March 2023, DOI: 10.13140/RG.2.2.29220.76161/2; https://www.researchgate.net/publication

Geier Stefan, Caroline Geier, Stephanie Geier, Katharina Geier, Constantin Geier, and Michèle Geier-Noehl: The damping "2h $\pi$ t" respective "2h $\pi$ n t(Planck)" of the 'NEWTON's Cradle' mechanical ball chain is compatible with a hosepipe KALUZA-KLEIN dimension with a radius ofh (BOHR's constant, DIRAC's constant) respective a radius of l(Planck). www.researchgate.net. July 2022, DOI: 10.13140/RG.2.2.35207.27046/1

Geier Stefan, Geier Caroline, Geier Stephanie, Geier Katharina, and Geier Constantin: Gravitons with Spin 2h in the Classical Pendulum: Quantum Physics Fits Newton's Classical Physics. Research Gate, August 2021, DOI: 10.13140/RG.2.2.35308.69769

Geier Stefan: " n e^2 = $\pi$ h R(K) " in GEIER's KOK cycle. Stefan Geier, Haidholzen: Facebook Microblogposting Beitrag am 30. Juni 2021, 2021a

Geier Stefan: 2h Graviton Quantum Correction on W Boson Mass Measurements is Feasible, and Necessary. eletter on CDF Collaboration†‡ et al.: High-precision measurement of the W boson mass with the CDF II detector. Science 376, 170-176(2022). DOI:10.1126/science.abk1781. Available from: https://www.researchgate.net/publication/362265777, 2022a

Geier Stefan: Comment on orbital-resolved observation of singlet fission. Neef, A., Beaulieu, S., Hammer, S. et al. Orbital-resolved observation of singlet fission. Nature 616, 275-279 ( 2023 ). https://www.nature.com/articles/s41586-023-05814-1; https://doi.org/10.1038/s41... ; Nature online: http://disq.us/t/4fooa65 .

Geier Stefan: Geier's Newton's Cradle acts as a Gravitational Quadrupole according to conceptual considerations, and the basic concepts of physics, and mathematics. Facebook und Blogger 2019, 2022. https://humanistischebetrachtungen1.blogspot.com/2022/08/newtons-cradle-acts-gravitational.html

Geier Stefan: NEWTON's Cradle allows to derive 10 + 1 dimensions thus proofing String Theory and M-Theory. Blog: Humanistische Betrachtungen und Gegenwart. Blogger, Juli 15, 2022. https://humanistischebetrachtungen1.blogspot.com/2022/07/newtons-cradle-allows-to-derive-10-1.html, 2022b

Geier Stefan: Tesseract in Christopher Nolan's, and Kip Thorne's "Interstellar", and in Geier's Newton's Cradle: A h Tesseract Combining Gravity and Quantum Physics. Blog: Humanistische Betrachtungen und Gegenwart. Blogger, Juli 19, 2021. https://humanistischebetrachtungen1.blogspot.com/2021/07/tesseract-in-christopher-nolans-and-kip.html, 2021b

Govindjee, Beatty Th J, Gest H: Celebrating the millennium, historical highlights of photosynthesis research, Part 2. Photosynthesis Research 76: 1-11, 2003

Govindjee, Gest H: Celebrating the millennium, historical highlights of photosynthesis research. Photosynthesis Research 73: 1-6, 2002. https://www.life.illinois.edu/govindjee/Part1/Part1 Govindiee Gest.pdf

Harvey Pierre D: What can we learn from artificial special pairs?. Canadian Journal of Chemistry. 2014, 92(5): 355-368. https://doi.org/10.1139/cjc-2013-0570

Hawking, Stephen: A Brief History of Time. Bantam Books, 1988.

Pasan Hiranya, Elliot Snider, Sasanka Munasinghe et al.: Observation of Conventional Near Room Temperature Superconductivity in Carbonaceous Sulfur Hydride. 2023, arXiv:2302.08622v2; https://doi.org/10.48550/arXiv.2302.08622, abgerufen am 9.06.2023

Hou HJM, Najafpour MM, Allakhverdiev SI, Govindjee G. Editorial: Current challenges in photosynthesis: From natural to artificial, volume II. Front Plant Sci. 2023 Jan 5;13:1113693. doi: 10.3389/fpls.2022.1113693. PMID: 36684774; PMCID: PMC9850143.

Huber Robert: Nobel Lecture. NobelPrize.org. Nobel Prize Outreach AB 2022. Tue. 18 Oct 2022. <https://www.nobelprize.org/prizes/chemistry/1988/huber/lecture/>

Kleidon Axel: Was begrenzt das Leben? Thermodynamik und Photosynthese im Erdsystem. Physik in unserer Zeit. 01 September 2021, Wiley Online Library https://doi.org/10.1002/piuz.202101614

Kok B, Forbush B, McGloin M: "Cooperation of charges in photosynthetic O2 evolution-I. A linear four step mechanism". Photochemistry and Photobiology. (June 1970). 11 (6): 457-475.

doi:10.1111/i.1751-1097.1970.tb06017.x. PMID 5456273. S2CID 31914925

Martinez-Jülvez M et al: Role of a cluster of Hydrophobie residues near the FAD cofactor in Anabaena PCC 7119 ferredoxin-NADP+ reductase for optimal complex formation and electron transfer to ferredoxin. J Biol Chem, 276, 27498-27510, 2001. https://www.jbc.org/article/S0021-9258(20)89880-9/fulltext

Meschede Dieter (Hrsg.): Gerthsen Physik. Springer, 25. Auflage, 2015

Messinger J, Badger M and Wydrzynski T: Detection of one slowly exchanging substrate water molecule in the S3 state of photosystem II. Proceedings of the National Academy of Sciences, 92(8), 1995 pp.3209-3213.

Mitchell Peter: David Keilin's Respiratory Chain Concept and Its Chemiosmotic Consequences. Nobel Lecture, 8 December, 1978. NobelPrize.org. Nobel Prize Outreach AB 2023. Wed. 21 Jun 2023. <https://www.nobelprize.org/prizes/chemistry/1978/Kantenl/lecture/>

Najafpour MM, Heidari S, Balaghi SE, Holynska M, Sadr MH, Soltani B, Khatamian M, Larkum AW, Allakhverdiev SI. Proposed mechanisms for water oxidation by Photosystem II and nanosized manganese oxides. Biochim Biophys Acta Bioenerg. 2017 Feb;1858(2):156-174. doi: 10.1016/j.bbabio.2016.11.007. Epub 2016 Nov 10. PMID: 27838231.

Najafpour MM, Moghaddam AN, Allakhverdiev SI, Govindjee. Biological water oxidation: lessons from nature. Biochim Biophys Acta. 2012 Aug;1817(8):1110-21. doi: 10.1016/j.bbabio.2012.04.002. Epub 2012 Apr 10. PMID: 22507946.

PBS Spacetime: The Equation That Explains (Nearly) Everything! https://youtu.be/PHiyQID7SBs; zuletzt aufgerufen 21.10.2022

Penrose Roger: The Road to Reality, Vintage, 2004, 2007

Susskind Leonard: The Cosmic Landscape. Back Bay Books, 2006

Piaget Jean: Der Strukturalismus. Klett-Cotta, 1980[1]

Reiher M, Wiebe N, Svore KM, Wecker D, Troyer M: "Elucidating reaction mechanisms on quantum computers". Proceedings of the National Academy of Sciences of the United States of America. 114 (29): 7555-7560, July 2017. arXiv:1605.03590. Bibcode:2017PNAS..114.7555R. doi:10.1073/pnas.1619152114. PMC 5530650. PMID 28674011.

Service Robert F: 'revolutionary' blue crystal resurrects hope of room temperature superconductivity. Controversial group's material could lead to hyperefficient electricity grids and computer chips. https://www.science.org/content/article/revolutionary-blue-crystal-resurrects-hope-room-temperaturesuperconductivity; 8 MAR 2023; doi: 10.1126/science.adh4968; aufgerufen 09.06.2023

Sautoy du Marcus: Das Geheimnis der Symmetrie. dtv, 2. Auflage 2012

Sharkey, T D: Estimating the rate of photorespiration in leaves. Physiologie Plantarum, 1988, 73: 147-152. https://doi.org/10.1111/i.1399-3054.1988.tb09205.x

Shevela D, Kern J F, Govindjee G et al.: Solar energy conversion by photosystem II: principles and structures. Photosynth Res 156, 279-307 ( 2023 ). Abgerufen 22.06.2023, https://doi.org/10.1007/s11120-022-00991-v

The Nobel Prize in Chemistry 1988. NobelPrize.org. Nobel Prize Outreach AB 2022. Tue. 18 Oct 2022. https://www.nobelprize.org/prizes/chemistry/1988/summary/

Tkatchenko Alexandre, Dmitry V. Fedorov, and Matteo Gori: Fine-Structure Constant Connects Electronic Polarizability and Geometrie van-der-Waals Radius of Atoms. The Journal of Physical Chemistry Letters 202112 (39), 9488-9492; DOI: 10.1021/acsjpclett.1c02461

Umena, Yasufumi; Kawakami, Keisuke; Shen, Jian-Ren; Kamiya, Nobuo: "Crystal structure of oxygen-evolving photosystem II at a resolution of 1.9 Å" (PDF). Nature. May 2011, 473 (7345): 55-60. doi:10.1038/nature09913. PMID 21499260

Weiss MC, Sousa FL, Mrnjavac N, Neukirchen S, Roettger M, Nelson-Sathi S, Martin WF: The physiology and habitat of the last universal common ancestor. Nat Microbiol. 2016 Jul 25;1(9):16116. doi: 10.1038/nmicrobiol.2016.116. PMID: 27562259.

Woithe Julia et al: Let's have a coffee with the Standard Model of particle physics! 2017 Phys. Educ. 52 034001

**Legenden** zu den Zeichnungen (Physikalisch-chemisch-technische Zeichnungen) der dreidimensionalen "Würfel mit Lehne" Photozellenkernstruktur zur Wasserstoffgewinnung (und Sauerstoffgewinnung) durch Wasserspaltung:

Zeichnung 1 Dreidimensionale tesseraktoide "Würfel mit Lehne" Photozellenkernstruktur mit 10 ausgezeichneten Koordinaten $x_i$ (i =1 bis 10: Die $x_i$ sind durch 10 Atome bzw. Moleküle zu besetzen.). Die Gesamtstruktur kann in D3 gedreht werden. Die Kantenlänge ist mit 2 Å (bis $\approx 3,5$ Å) anzusetzen und kann variieren. Bei einer Elektronenspeicherung von mehreren Einzelelektronen $e_j$ im Abstand von bis zu $\approx 4$ Å in einem Kristall-Äquivalent sind besondere Effekte möglich (z.Bsp. Pseudogap-Regime).

Zeichnung 2 Idealtypische bionische Grundstruktur der "Würfel mit Lehne" Photozellenkernstruktur mit den 10 Atomen $Mn_4O_5Ca$ nach dem Strukturergebnis der Röntgenkristallographiestrukturanalyse von UMENA et al., 2011. Je zwei O-Atome liegen sich diagonal gegenüber und können so ein $H_2O$ oder $H_2X$ Molekül über Wasserstoffbrücken etc. in der Diagonale binden bzw. adsorbieren. Die Elektronenübertragung erfolgt von den Wassermolekülen zu den Cluster-Ionen und in die Cluster-Quadrate. Nach Aufnahme des vierten Elektrons von je 2 $H_2O$ oder n $H_2S$ bzw. n $H_2X$ (n sei eine natürliche Zahl) kann die $O_2$-Bildung etc. und ebenso eine Abgabe der Elektronen und Protonen aus dem Cluster erfolgen. Für eine abschließende Abgabe aller vier Elektronen sind die beiden seitlichen (Speicher-) Quadrate wegen der dortigen Möglichkeit der ersten Bildung eines COOPER-Elektronen-Paares oder Quasi-COOPER-Elektronen-Paares und das Henkel-Quadrat, das Boden-Quadrat und das Calcium-Ion mit entscheidend. Das Ca-Ion, allgemein das Hetero-Ion, kann mit allen anderen Ionen in orthogonaler symmetrischer Weise bzgl. der Medianebene der Würfel mit Lehne Struktur gespiegelt ohne Effizienzverlust die gegenüberliegenden Positionen einnehmen. Das Hetero-Ion ist ebenso als Dotierung im d-Orbitale miteinbeziehenden JAHN-TELLER-Theorem konformen Kristall mit MnO als Kristallgrundlage zu verstehen und so prädestinierter Abgabepunkt der Elektronen relativ distal zu den Wassermolekülen.

Zeichnung 3 Das vierte Elektron hat vier potenzielle Kurzzeit-Speicherstellen in der tesseraktoiden Würfel mit Lehne Struktur (die unbesetzten d- und s- Orbitale des Cluster-integrierten Ca oder Sr Ions bieten neben den je nach Redox-Status nicht besetzten d- und s- Orbitalen der Mn Ionen weitere Ultrakurzzeitspeicherstellen an) und entspricht dem instabilen $S^{4+}$ Zustand nach Bessel KOK. Ausgezeichnet im Sinne einer Distanzmaximierung mittiger Elektronen ist das Bodenquadrat.

## Patentansprüche

1. Pico- bzw. nanotechnologische Vorrichtung zur Spaltung von Wasser in Sauerstoff und Wasserstoff im Sinne des KOK-Zyklus der Photosynthese II mittels vier Elektronen, die in einer mit Atomen, Ionen und bzw. oder mit Molekülen gebildeten tesseraktoiden Würfel mit Lehne pico- bzw. nanotechnologischen Struktur (z.Bsp. $Mn_4O_5Ca$ oder $Mn_4O_5Sr$) zusammengeführt werden und (kurzfristig) in dieser Struktur gespeichert werden. Die vier Elektronen werden entsprechend den Gesetzen der Physik, einschließlich der Gesetze und Prinzipien der Quantenphysik [auch Energie- und Impulsübertragungen von Bosonen (Photonen, Gravitonen, ...) auf Fermionen (Elektronen, Wasser, ...)], der physikalischen Chemie und Biochemie und der Festkörperphysik von zwei Molekülen Wasser übernommen und die Spaltungsprodukte Sauerstoff (ein Molekül) und Wasserstoff (vier Protonen bzw. zwei Moleküle Wasserstoff) entstehen.

2. Pico- bzw. nanotechnologische bionische Vorrichtung mit einer Prozessangabe zur Fission von Wasser in Wasserstoff und Sauerstoff (allgemein: Spaltung von $n \cdot H_2X$ in $n \cdot H_2$ oder $2n \cdot H$ und $n \cdot X$ oder $n/2 \cdot X_2$) im Sinne des KOK-Zyklus der Photosynthese II mittels (zwei oder) vier Elektronen, die in einer mit Atomen, Ionen und bzw. oder mit Molekülen gebildeten tesseraktoiden Würfel mit Lehne Struktur, die typischerweise ein MesOs Cluster mit einem Heterometallion (z.Bsp. $Mn_4O_5Ca$ oder $Mn_4O_5Sr$) ist, zusammengeführt werden und (kurzfristig) in dieser Struktur gespeichert werden. Die vier Elektronen werden entsprechend den Gesetzen der Physik, einschließlich der Gesetze und Prinzipien der Quantenphysik [auch Energie- und Impulsübertragungen von Bosonen (Photonen, Gravitonen, ...) auf Fermionen (Elektronen, $H_2X$, ...) und umgekehrt], der physikalischen Chemie (u.a. Elektronegativität) und der Halbleiterphysik von (ein oder) typischerweise zwei (oder mehr) Molekülen $H_2X$ übernommen und die Spaltungsprodukte X (ein Molekül $X_2$ oder zwei Moleküle X oder entsprechendes) und Wasserstoff (oder Protonen) entstehen.

3. Pico- bzw. nanotechnologische Vorrichtung zur Spaltung von $n \cdot H_2X$ in $n \cdot H_2$ oder $2n \cdot H$ und $n \cdot X$ oder $n/2 \cdot X_2$ (typischerweise Spaltung von zwei Wassermolekülen in ein Molekül Sauerstoff und zwei Moleküle Wasserstoff oder vier Protonen) im Sinne des KOK-JOLIOT-Zyklus der Photosynthese II mittels (zwei oder) vier Elektronen, die in einer mit Atomen, Ionen und bzw. oder mit Molekülen gebildeten tesseraktoiden Würfel mit Lehne pico- bzw. nanotechnologischen Struktur, die typischerweise ein MesOs Cluster mit einem Heterometallion (z.Bsp. $Mn_4O_5Ca$ oder $Mn_4O_5Sr$) ist, zusammengeführt werden und (kurzfristig) in dieser Struktur gespeichert werden. Die tesseraktoide Würfel mit Lehne Struktur ermöglicht mit den Heteroionen Calcium (meist optimal wegen des doppelt magischen Kernes) oder Strontium etc. eine zumindest zweiphasige Aufnahme, Speicherung und Weiterleitung der (zwei oder) vier Elektronen in einem drei- plus zweischrittigen (3+1+1) Prozess (i) auf Grund der Geometrie der Kantenberührungen der Seitenquadrate der Würfel mit Lehne Struktur und (ii) auf Grund der Energie-Aufspaltung der fünf d-Orbitale der fünf Metallionen in drei plus zwei Orbitale jeweils unterschiedlichen Energieniveaus im Würfel mit Lehne (Quasi-)Kristall nach dem JAHN-TELLER-Theorem und bzw. oder (iii) auf Grund der typischerweise solitären Mn[V] Oxidationsstufe, die gleichzeitig mit der solitären Nichtbesetzung eines niederenergetischen $t_{2g}$-d-Orbitals dieses Manganions einhergeht, des Manganions an der Oberen Lehnenkante und so eine Erstbesetzung des Lehnenquadrats, eine Zweitbesetzung eines Seitenquadrats, eine Drittbesetzung eines weiteren Seitenquadrats und eine Viertbesetzung eines beliebigen weiteren Seitenquadrats mit einem Elektron. Die (zwei oder) vier Elektronen werden so entsprechend den Gesetzen der Physik, einschließlich der Gesetze und Prinzipien der Quantenphysik [auch Wirkungs-, Energie- und Impulsübertragungen von Bosonen (Photonen, Gravitonen, ...) auf Fermionen (Elektronen, $H_2X$, ...) (und umgekehrt); Elektronentransfer entsprechend der von KLITZING Konstante $R_K=h/e^2$ (Quantum des Quanten Hall Effekts) und der Sommerfeld'schen Feinstrukturkonstante alpha; JAHN-TELLER-Theorem; doppelt magische Kerne], des Standard Modells mit seiner Lagrangedichte, der Festkörperphysik und der physikalischen Chemie, Elektrochemie und Biochemie (u.a. Elektronegativität) vom $Me_5O_5$ Cluster (idealtypisch $Mn_4O_5Ca$) von zwei Molekülen $H_2X$ (typisch $H_2O$ oder $H_2S$) übernommen und die Spaltungsprodukte X (ein Molekül $X_2$, zwei Moleküle X oder entsprechendes) und zwei oder vier Protonen oder ein oder zwei Moleküle Wasserstoff entstehen.

Zeichnung 1

Zeichnung 2

Zeichnung 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KOK B ; FORBUSH B ; MCGLOIN M.** Cooperation of charges in photosynthetic 02 evolution-I. A linear four step mechanism. *Photochemistry and Photobiology.,* Juni 1970, vol. 11 (6), 457-475
- Einblicke in das faszinierende Kraftwerk der Natur: das wasserspaltende System der Photosynthese. **AMES W ; PANTAZIS DA ; NEESE F.** Forschungsbericht. Max-Planck-Institut für Chemische Energiekonversion, 2010
- **BARBER, JAMES.** Photosystem II: The Water-Splitting Enzyme of Photosynthesis. *Cold Spring Harbor symposia on quantitative biology,* 2012
- **BHOWMICK A ; HUSSEIN R ; BOGACZ I et al.** Structural evidence for intermediates during O2 formation in photosystem II. *Nature,* 27. Juni 2023, vol. 617, 629-636, https://doi.org/10.1038/s41586-023-06038-z
- What is photosynthesis ? -A broader and inclusive view. **BJÖRN LO ; SHEVELA D ; GOVIDNJEE.** A closer look at photosynthesis. Nova Sience Publishers, 21. Juni 2023
- **BOUSSAC A ; SUGIURA M ; RUTHERFORD AW ; DORLET P.** Complete EPR spectrum of the S3-state of the oxygen-evolving photosystem II. *J Am Chem Soc.,* 15. April 2009, vol. 131 (14), 5050-1
- **BUCHMÜLLER WAND LÜDELING C.** *Field theory and the Standard Model.,* 2006, https://cds.cern.ch/record/984122/files/p1.pdf
- *Chemie.de: Photosynthese,* 16. Juni 2023, https://www.chemie.de/lexikon/Photosynthese.html
- **CHEN Y ; XU B ; YAO R ; CHEN C ; ZHANG C.** Mimicking the Oxygen-Evolving Center in Photosynthesis. *Front. Plant Sci.,* 2022, vol. 13, 929532
- **DASENBROCK-GAMMON N ; SNIDER E ; MCBRIDE R. et al.** Evidence of near-ambient superconductivity in a N-doped lutetium hydride. *Nature,* 2023, vol. 615, 244-250, https://doi.org/10.1038/s41586-023-05742-0
- **EMERSON R ; ARNOLD W.** The photochemical reaction in photosynthesis. *J Gen Physiol.,* 20. November 1932, vol. 16 (2), 191-205
- **GAßNER JOSEF ; MÜLLER JÖRN.** *Können wir die Welt verstehen?,* 2019
- **GEIER STEFAN ; CAROLINE GEIER ; STEPHANIE GEIER ; KATHARINA GEIER ; CONSTANTIN GEIER ; MICHÈLE GEIER-NOEHL.** Essay. *Eine Theorie über die Besonderheit und deren Begründetheit des Kalzium Atoms, 20Ca, als Ion im Mn4O5Ca Cluster des Wasser-spaltenden Komplexes der Photosynthese II. Mit anhängenden Kommentaren,* 18. Marz 2023, https://www.researchgate.net/publication
- **GEIER STEFAN ; CAROLINE GEIER ; STEPHANIE GEIER ; KATHARINA GEIER ; CONSTANTIN GEIER ; MICHÈLE GEIER-NOEHL.** *The damping "2h $\pi$ t" respective "2h $\pi$ n t(Planck)" of the 'NEWTON's Cradle' mechanical ball chain is compatible with a hosepipe KALUZA-KLEIN dimension with a radius ofh (BOHR's constant, DIRAC's constant) respective a radius of I(Planck).,* Juli 2022, www.researchgate.net.
- **GEIER STEFAN ; GEIER CAROLINE ; GEIER STEPHANIE ; GEIER KATHARINA ; GEIER CONSTANTIN.** Gravitons with Spin 2h in the Classical Pendulum: Quantum Physics Fits Newton's Classical Physics. *Research Gate,* August 2021
- **GEIER STEFAN.** n e^2 = $\pi$ h R(K). *GEIER's KOK cycle,* 30. Juni 2021
- **GEIER STEFAN et al.** 2h Graviton Quantum Correction on W Boson Mass Measurements is Feasible, and Necessary. eletter on CDF Collaboration†‡ et al.: High-precision measurement of the W boson mass with the CDF II detector. *Science,* 2022, vol. 376, 170-176, https://www.researchgate.net/publication/362265777
- **GEIER STEFAN ; NEEF, A. ; BEAULIEU, S. ; HAMMER, S. et al.** Comment on orbital-resolved observation of singlet fission. *Orbital-resolved observation of singlet fission. Nature,* 2023, vol. 616, 275-279, https://www.nature.com/articles/s41586-023-05814-1; https://doi.org/10.1038/s41
- **GEIER STEFAN.** Geier's Newton's Cradle acts as a Gravitational Quadrupole according to conceptual considerations, and the basic concepts of physics, and mathematics. *Facebook und Blogger,* 2019, https://humanistischebetrachtungen1.blogspot.com/2022/08/newtons-cradle-acts-gravitational.html

- **GEIER STEFAN.** NEWTON's Cradle allows to derive 10 + 1 dimensions thus proofing String Theory and M-Theory. *Blog: Humanistische Betrachtungen und Gegenwart. Blogger,* 15. Juli 2022, https://humanistischebetrachtungen1.blogspot.com/2022/07/newtons-cradle-allows-to-derive-10-1.html
- **GEIER STEFAN.** Tesseract in Christopher Nolan's, and Kip Thorne's "Interstellar", and in Geier's Newton's Cradle: A h Tesseract Combining Gravity and Quantum Physics. *Humanistische Betrachtungen und Gegenwart. Blogger,* 19. Juli 2021, https://humanistischebetrachtungen1.blogspot.com/2021/07/tesseract-in-christopher-nolans-and-kip.html
- **GOVINDJEE ; BEATTY TH J ; GEST H.** Celebrating the millennium, historical highlights of photosynthesis research. *Photosynthesis Research,* 2003, vol. 76, 1-11
- **GOVINDJEE, GEST H.** Celebrating the millennium, historical highlights of photosynthesis research. *Photosynthesis Research,* 2002, vol. 73, 1-6, https://www.life.illinois.edu/govindjee/Part1/Part1 Govindiee Gest.pdf
- **HARVEY PIERRE D.** What can we learn from artificial special pairs?. *Canadian Journal of Chemistry.,* 2014, vol. 92 (5), 355-368, https://doi.org/10.1139/cjc-2013-0570
- **HAWKING, STEPHEN.** A Brief History of Time. *Bantam Books,* 1988
- **PASAN HIRANYA ; ELLIOT SNIDER ; SASANKA MUNASINGHE et al.** Observation of Conventional Near Room Temperature Superconductivity in Carbonaceous Sulfur Hydride. *arXiv:2302.08622v2,* 09. Juni 2023, https://doi.org/10.48550/arXiv.2302.08622
- **HOU HJM ; NAJAFPOUR MM ; ALLAKHVERDIEV SI ; GOVINDJEE G.** Editorial: Current challenges in photosynthesis: From natural to artificial, volume II. *Front Plant Sci.,* 05. Januar 2023, vol. 13, 1113693
- **HUBER ROBERT.** Nobel Lecture. *Nobel Prize Outreach AB 2022,* 18. Oktober 2022, https://www.nobelprize.org/prizes/chemistry/1988/huber/lecture
- Was begrenzt das Leben?. **KLEIDON AXEL.** Thermodynamik und Photosynthese im Erdsystem. Physik in unserer Zeit. Wiley Online Library, 01. September 2021
- **KOK B ; FORBUSH B ; MCGLOIN M.** Cooperation of charges in photosynthetic O2 evolution-I. A linear four step mechanism. *Photochemistry and Photobiology,* Juni 1970, vol. 11 (6), 457-475
- **MARTINEZ-JÜLVEZ M et al.** Role of a cluster of Hydrophobie residues near the FAD cofactor in Anabaena PCC 7119 ferredoxin-NADP+ reductase for optimal complex formation and electron transfer to ferredoxin. *J Biol Chem,* 2001, vol. 276, 27498-27510, https://www.jbc.org/article/S0021-9258(20)89880-9/fulltext
- Gerthsen Physik. Springer, 2015
- **MESSINGER J ; BADGER M ; WYDRZYNSKI T.** Detection of one slowly exchanging substrate water molecule in the S3 state of photosystem II. *Proceedings of the National Academy of Sciences,* 1995, vol. 92 (8), 3209-3213
- **MITCHELL PETER.** David Keilin's Respiratory Chain Concept and Its Chemiosmotic Consequences. Nobel Lecture. *Nobel Prize Outreach AB 2023,* 08. Dezember 1978, https://www.nobelprize.org/prizes/chemistry/1978/Kantenl/lecture
- **NAJAFPOUR MM ; MOGHADDAM AN ; ALLAKHVERDIEV SI, GOVINDJEE.** Biological water oxidation: lessons from nature. *Biochim Biophys Acta,* 10. April 2012, vol. 1817 (8), 1110-21
- *PBS Spacetime: The Equation That Explains (Nearly) Everything!,* 21. Oktober 2022, https://youtu.be/PHiyQID7SBs
- **PENROSE ROGER.** *The Road to Reality, Vintage,* 2004
- **SUSSKIND LEONARD.** The Cosmic Landscape. *Back Bay Books,* 2006
- **PIAGET JEAN.** *Der Strukturalismus. Klett-Cotta,* 1980
- **REIHER M ; WIEBE N ; SVORE KM ; WECKER D ; TROYER M.** Elucidating reaction mechanisms on quantum computers. *Proceedings of the National Academy of Sciences of the United States of America,* Juli 2017, vol. 114 (29), 7555-7560
- **SERVICE ROBERT F.** revolutionary' blue crystal resurrects hope of room temperature superconductivity. *Controversial group's material could lead to hyperefficient electricity grids and computer chips,* 08. Marz 2023, https://www.science.org/content/article/revolutionary-blue-crystal-resurrects-hope-room-temperaturesuperconductivity
- **SAUTOY DU MARCUS.** Das Geheimnis der Symmetrie. 2012
- **SHARKEY, T D.** Estimating the rate of photorespiration in leaves. *Physiologie Plantarum,* 1988, vol. 73, 147-152, https://doi.org/10.1111/i.1399-3054.1988.tb09205.x
- **SHEVELA D ; KERN J F ; GOVINDJEE G et al.** Solar energy conversion by photosystem II: principles and structures. *Photosynth Res,* 22. Juni 2023, vol. 156, 279-307, https://doi.org/10.1007/s11120-022-00991-v

- The Nobel Prize in Chemistry 1988. *Nobel Prize Outreach AB 2022,* 18. Oktober 2022, https://www.nobelprize.org/prizes/chemistry/1988/summary/

- **TKATCHENKO ALEXANDRE ; DMITRY V. FEDOROV ; MATTEO GORI.** Fine-Structure Constant Connects Electronic Polarizability and Geometrie van-der-Waals Radius of Atoms. *The Journal of Physical Chemistry Letters,* vol. 202112 (39), 9488-9492

- **UMENA, YASUFUMI ; KAWAKAMI, KEISUKE ; SHEN, JIAN-REN ; KAMIYA, NOBUO.** Crystal structure of oxygen-evolving photosystem II at a resolution of 1.9 Å'' (PDF). *Nature,* Mai 2011, vol. 473 (7345), 55-60

- **WEISS MC ; SOUSA FL ; MRNJAVAC N ; NEUKIRCHEN S ; ROETTGER M ; NELSON-SATHI S ; MARTIN WF.** The physiology and habitat of the last universal common ancestor. *Nat Microbiol.,* 25. Juli 2016, vol. 1 (9), 16116

- **WOITHE JULIA et al.** Let's have a coffee with the Standard Model of particle physics!. *Phys. Educ.,* 2017, vol. 52, 034001